# EUROPEAN PATENT SPECIFICATION

(11) **EP 0 458 902 B1**
(45) Date of publication and mention of the grant of the patent: **23.06.1999**
(21) Application number: 90904121.2
(22) Date of filing: 15.02.1990
(51) Int. Cl.: G08B 21/00, B60K 41/18, F16H 59/12

(54) **MOTOR VEHICLE CONTROL SYSTEM**
STEUERUNGSSYSTEM FÜR FAHRZEUG
SYSTEME DE COMMANDE DE VEHICULES A MOTEUR

(30) Priority: 16.02.1989 US 311982; 15.03.1989 US 323825
(43) Date of publication of application: 04.12.1991
(73) Proprietor: AUTOMOTIVE PRODUCTS (USA) INC., Sterling Heights MI 48077 (US)
(72) Inventor: LEIGH-MONSTEVENS, Keith, V., Troy, MI 48098 (US); PETERSON, David, C., Walled Lake, MI 48088 (US); MABEE, Brian, Sterling Heights, MI 48077 (US); TURY, Edward, L., Brighton, MI 48116 (US)
(74) Representative: Stanley, Michael Gordon
(86) International application number: US9000881
(87) International publication number: WO9009649

(56) References cited:
- EP-A- 0 096 352
- EP-A- 0 250 333
- DE-A- 3 730 715
- DE-A- 3 827 660
- US-A- 4 495 457
- US-A- 4 635 508
- US-A- 4 638 882
- US-A- 4 682 062
- US-A- 4 785 615
- US-A- 4 817 471
- US-A- 4 848 529

## Description

### Background of the Invention

This invention relates to electrical control apparatus for motor vehicles through which the operative state of a transmission is controlled.

Such electrical control apparatus are known, see for example EP-A-0096352 in which a gear selector having a number of push buttons actuates an actuator, which may be electrical, to move a transmission state selection member of the transmission to select a desired transmission state. This apparatus also includes a hierarchy of priority for the push buttons to determine which button signal is used if more than one button is pressed.

Whilst such a control apparatus may operate satisfactorily for some vehicle applications its lack of a sensor to provide a positive indication as to the transmission state currently engaged introduces uncertainty into its operation and is not seen as desirable.

### Summary of the Invention

It is an object of the present invention to provide an improved control apparatus which overcomes the above deficiency.

Thus according to the present invention there is provided an electrical control apparatus for control of a transmission in a motor vehicle having a plurality of transmission states selected by movement of a state selection member, said electrical control apparatus comprising:
electrical actuator means adapted for connection with the transmission state selection member to shift the transmission apparatus between transmission states,
a gear selector including a plurality of driver-operated momentary contact push buttons, each corresponding to a predetermined transmission state of said plurality of transmission states; and
a logic control unit connected to the electrical actuator means and said plurality of momentary contact push buttons, the logic control unit generating a desired transmission state signal corresponding to the contact push button depressed by the driver and also controlling the electrical actuator means to shift the transmission from its present state to the state corresponding to said desired transmission state signal, the apparatus being characterised in that the transmission has a state selector member which is connected with an actuator means and a transmission state sensing means which provides a signal to the logic control unit indicative of the current state of the transmission, the logic control unit comparing the signal from the transmission state sensing means with the desired transmission state signal and actioning the electrical actuator means to shift to the desired transmission state if these signals differ, and the actuator means also operates a kick-down lever of the transmission under the control of the logic control unit in response to signals received by the logic control unit from a sensing means associated with an accelerator pedal of the vehicle indicating a kick-down operation of the accelerator pedal.

In such an arrangement the electrical actuator means may comprise an electric motor which operates the transmission state selection member and a solenoid which operates the kick-down lever.

Both the motor and solenoid may be respectively connected with the transmission selection member and kick-down lever via quick-attach formations.

The transmission state sensing means may comprise a wheel which is rotated by the actuator means during shifting of the transmission states and which has electrically conductive indicia tracks which move past a pick-up device to provide in co-operation with the pick-up signals indicative of the current state of the transmission.

The practicality and ease of installation of the apparatus may be further increased by arranging that the electric motor, solenoid and sensing wheel are all mounted on the transmission casing via a common bracket.

The logic control unit may also generate a signal if said desired transmission state signal differs from said present transmission state signal for longer that a predetermined period of time, for inhibiting control of the electrical actuator means upon generation of said fault signal, and a fault indicator connected to said logic control means may produce an operator perceivable fault indication upon generation of said fault signal.

The logic control unit may also receive signals from a vehicle speed sensing means and generate an error signal if said vehicle speed signals indicate a vehicle speed greater than a predetermined vehicle speed corresponding to said desired transmission state signal, the electronic control unit also inhibiting control of the electrical actuator means and providing a signal to an error indicator upon generation of said error signal.

The logic control unit may also provide an output signal indicative of the current state of the transmission.

This signal indicative of the current state of the transmission from the logic control unit may be displayed to the driver for a predetermined time after removal of an ignition key from an ignition lock of the vehicle and also for a predetermined time after the entry of the driver into the vehicle.

The logic control unit may be arranged to issue a signal to the electrical actuator means to select the park transmission state when the ignition Key is moved from an "on" to an "off" position.

The electrical actuator means may form part of an anti-theft logic circuit which includes the gear selector and which requires the push buttons of the gear selector to be operated in a predetermined sequence before operation of the electrical actuator means is enabled.

The electronic control unit may also be arranged to sense various vehicle and driver conditions and issues a signal to a lock associated with a steering column of the vehicle to lock the column against rotation if a predetermined set of sensed vehicle and driver conditions occurs.

### Brief Description of the Drawings

Figure 1 is a fragmentary perspective view of a motor vehicle embodying a control system according to the invention;
Figure 2 is a fragmentary view looking in the direction of the arrow 2 in Figure 1;
Figure 3 is a perspective view of a power module employed in the invention control system;
Figure 4 is a fragmentary cross-sectional view taken on line 4-4 of Figure 3;
Figure 5 is a fragmentary view taken in the direction of the arrow 5 in Figure 3;
Figure 6 is a cross-sectional view taken on line 6-6 of Figure 4;
FIGURE 7 is a perspective view of a bracket employed in the power module of the invention;
FIGURE 8 is a fragmentary perspective view of a control module employed in the control system of the invention;
FIGURE 9 is a circuit diagram for the invention control system;
FIGURE 10 is a schematic view of the control system of the invention;
FIGURE 11 is a more detailed schematic view of the speed analog-to-digital converter illustrated in Figure 10;
FIGURE 12 is a schematic view of a typical indicator lamp circuit including its connection to the variable illumination supply;
FIGURE 13 is a schematic view of the timing circuit which ensures that the motor control signals are not generated for longer than a predetermined period of time;
FIGURE 14 is a schematic diagram of the motor drive circuit;
FIGURE 15 is a somewhat schematic view of a roostertail member embodied in the transmission of the vehicle and illustrating the operation of the encoder mechanism to indicate the exact center of the range for each gear selected;
FIGURE 16 is a fragmentary perspective schematic view of a motor vehicle embodying a modified form of control system according to the invention;
FIGURE 17 is a block diagram of the control system of FIGURE 16;
FIGURE 18 is a fragmentary plan view of a motor vehicle utilizing the modified invention control system;
FIGURE 19 is a cross-sectional view of a power module utilized in the modified invention control system; and
FIGURE 20 is a view taken on line 20-20 of FIGURE 19.

### Detailed Description of the Preferred Embodiments

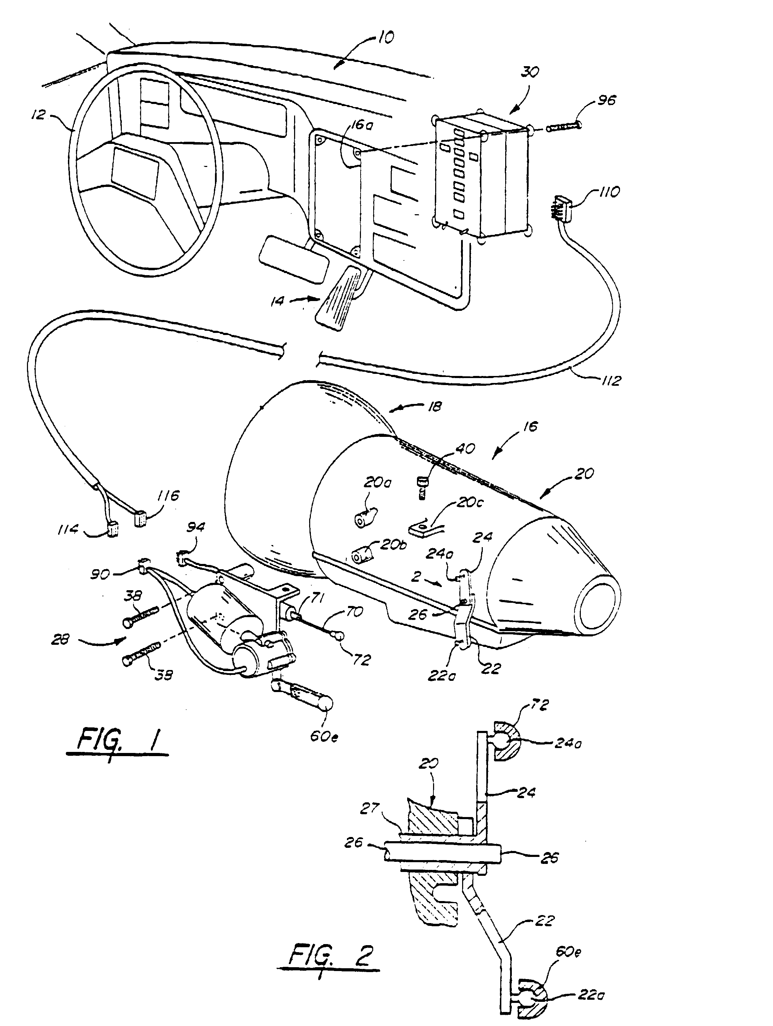

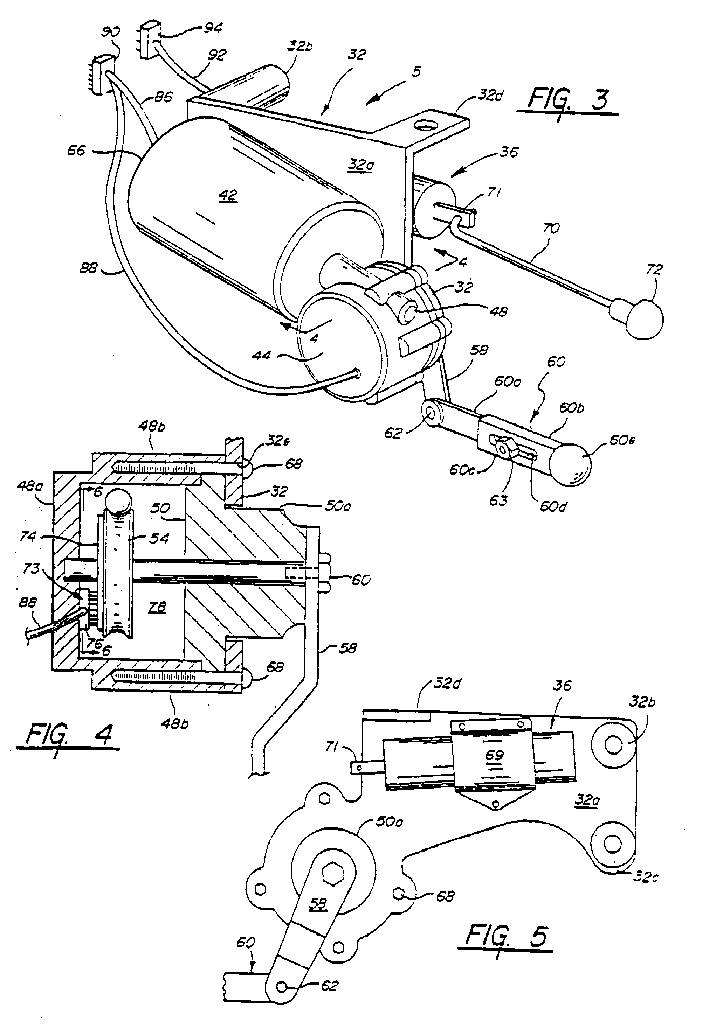

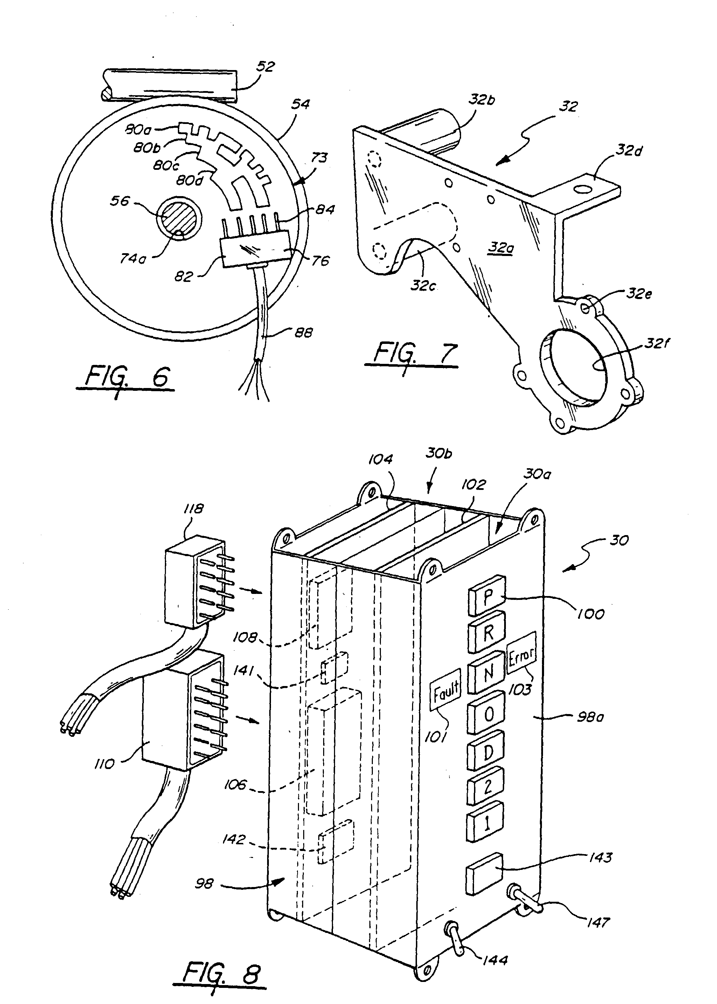

The invention seen in FIGURES 1-15 will first be described.

The electric shift apparatus including the electrical control system of the present invention is seen schematically in Figure 1 in association with a motor vehicle of the type including an instrument panel assembly 10 positioned within the passenger compartment of the motor vehicle; a steering wheel 12 associated with the instrument panel; an accelerator pedal assembly 14; and an automatic transmission assembly 16 including a torque converter 18 and a transmission 20. Transmission 20 includes a mode select lever 22 and a kick-down lever 24 each mounted externally of the transmission housing for pivotal movement at one end thereof about a common axis. Specifically, kick-down lever 24 is fixedly mounted at its lower end on a shaft 26 and mode select lever 22 is fixedly mounted at its upper end on a tubular shaft 27 (see Figure 2) mounted concentrically on shaft 26. It will be understood that selected pivotal movement of mode select lever 22 rotates tubular shaft 27 to operate internal devices within the transmission to position the transmission in a plurality of transmission modes such as park, neutral, drive, etc., and that pivotal movement of kick-down lever 24 rotates shaft 26 to operate internal devices within the transmission to the next lower gear for passing purposes or the like.

Power module 28 is adapted to be bolted to the transmission in proximity to levers 22 and 24 and includes a bracket 32, a motor assembly 34, and a solenoid 36.

Bracket 32 may be formed as a die casting and includes a planar main body portion 32a, lug portions 32b and 32c and a flange portion 32d. Bracket 32 is readily bolted to the housing of transmission 20 by bolts 38 passing through lugs 32b and 32c for threaded engagement with threaded bosses 20a and 20b on the transmission housing, and by a bolt 40 passing downwardly through an aperture in a flange 32 on the transmission housing for threaded engagement with a lug 20c on the transmission. Bosses 20a and 20b and lug 20c are already present on a typical automatic transmission housing and therefore need not be especially provided to carry out the invention.

Motor assembly 34 includes a DC electric motor 42, a speed reduction unit 44, and a lever assembly 46.

Motor 42 is direct current and may for example have an output torque rating of 200 inch pounds.

Speed reduction unit 44 is suitably secured to motor 42 and includes a housing 48, a cover plate 50 having a central hub member 50a, a worm gear 52 co-axial with the output drive of the motor 42, a worm wheel 54 driven by worm gear 52, and an output shaft 56 driven by worm wheel 54 and journalled in cover plate 50 and in an end wall 48a of housing 48.

Lever assembly 46 includes a first lever 58 secured by a nut 60 to the free end of speed reduction unit output shaft 56, and a second lever 60 secured by pivot means 62 to the free end of lever 58. Lever 60 is a compound member and includes sections 60a and 60b. Section 60b telescopically receives section 60a and with a pin 60c carried by section 60a guiding in a slot 60d in section 60b to allow the two sections to move axially relative to each other to vary the effective length of lever 60. The two sections may be locked in any selected position of adjustment by a nut 63 carried by pin 60c. The free end of lever 60 comprises a plastic snap fitting 60e for snapping engagement with a ball fitting 22a on the free end of mode select lever 22.

The motor assembly 34 is mounted on the outboard face of the planar main body portion 32a of bracket 32. Specifically, motor 42 is mounted to the outboard face of bracket portion 32a by a bracket 66 and speed reduction unit 44 is mounted to the outboard face of bracket portion 32a by a plurality of circumferentially spaced bolts 68 passing through apertures 32e in bracket 32 and through suitable apertures in speed reduction unit cover plate 50 for engagement with threaded bosses 48b spaced circumferentially about housing 48. In assembled relation, the hub portion 50a of cover plate 50 passes through aperture 32f in bracket 32 to position lever 58 on the inboard face of the bracket.

Solenoid 36 may comprise for example a pull type unit capable of generating three pounds of pull and having a stroke of between three-eighths and one-half inch. Solenoid 36 is secured to the inboard face of planar main body portion 32a of bracket 32 by a clamp 69. A cable 70 is secured to the plunger 71 of the solenoid and a plastic snap fitting 72 is secured to the free end of cable 70.

Power module 28 further includes an encoder assembly 73 operative to sense the shift position of the transmission and generate an encoded signal representative of the sensed shift position.

Encoder assembly 73 includes an encoder wheel 74 and a pick-up device 76. Encoder wheel 74 may be formed for example of a suitable plastic material with conductive coating and is positioned on a side face of worm wheel 54 within the closed and sealed interior chamber 78 defined by housing 48 and cover plate 50. Encoder wheel 74 includes a central aperture 74a passing speed reduction unit output shaft 56 and further includes code indicia 80 provided on the exposed outer face of the wheel and arranged along four arcuate tracks 80a, 80b, 80c and 80d centered on the center line of the encoder wheel.

Pick-up device 76 includes a body member 82 mounting a plurality of flexible resilient contact fingers 84 for respective coaction with indicia tracks 80a, 80b, 80c and 80d. In addition to the four fingers 84 for respective engagement with the four indicia tracks, a fifth finger is provided to provide a ground for the system.

A lead 86 from motor 42 and a lead 88 from pick-up device 76 are combined into a pin-type plug 90 and a lead 92 from solenoid 36 terminates in a pin-type plug 94.

Control module 30 is intended for ready installation in an opening 10a in instrument panel 10 or a center console disposed between the two front seats by insertion of the module from the rear of the housing and fastening of the module within opening 10a by the use of several fasteners such as seen at 96. Module 30 includes a housing structure 98 of general box-like configuration enclosing an operator access or push-button submodule 30a and a logic submodule 30b.

Push-button submodule 30a includes a plurality of push-buttons 100 positioned in vertically spaced relation in the front face 98a of the module housing and corresponding to the available transmission shift modes. Specifically, buttons 100 include buttons corresponding to park, reverse, neutral, overdrive, drive, second and first shift positions for the transmission. Buttons 100 coact in known manner with a printed circuit board 102 to generate suitable electrical signals in response to respective depression of the buttons 100. Also present on front face 98a are two indicator lamps: fault indicator 101; and error indicator 103. These lamps are illuminated to indicate respective fault and error conditions in a manner that will be further detailed below.

Logic submodule 30b includes an electronic printed circuit board 104 suitably electrically connected to printed circuit 102 and suitably mounting a first plurality of connector terminals 106 and a second plurality of connector terminals 108. Connector terminals 106 coact with a pin-type plug 110 at the end of a cable 112. Cable 112 includes plugs 114 and 116 at its remote end for plugging receipt of plugs 90 and 94 so that plug 110 embodies the information from leads 86, 88 and 92. Connector terminals 108 coact with a pin-type plug 118. Plug 118 embodies the information from leads 120, 121, 122, 123, 124, 125, 126, 128 and 129. Lead 120 is associated with a switch 130 sensing the open or closed position of the driver's door of the vehicle; lead 121 is associated with a switch 132 sensing the presence or absence of a driver on the driver's seat of the vehicle; lead 122 senses the open or closed condition of the ignition switch 134 of the vehicle; leads 123 and 124 are connected to the negative and positive terminals of the vehicle battery 135 with a suitable fuse 136 in lead 123; lead 125 is connected to a speed sensor 137 which provides information with respect to the instantaneous speed which the vehicle is traveling; and lead 126 is connected with a switch 138 which is closed in response to movement of throttle lever 139 to its extreme open throttle position by a cable 140 connected in known manner to the accelerator assembly 14 of the vehicle. Lead 128 is connected with brake switch 133 which senses whether or not the brake is actuated. Lead 129 is connected with seat belt switch 135 which senses whether or not the driver's seat belt is fastened.

The electric shift assembly is delivered to the vehicle manufacturer in the form of power module 28 and control module 30. During the assembly of the vehicle, the power module 28 is mounted on the transmission housing proximate the control levers 24 and 26 and the control module 30 is mounted in the instrument panel 10, whereafter plugs 90 and 94 are plugged into plugs 114 and 116 and plugs 110 and 118 are plugged into control module 30 to complete the assembly of the invention electric shift apparatus.

The mounting of power module 28 on the transmission housing is accomplished simply by passing bolts 38 through bosses 32b and 32c for threaded engagement with transmission housing bosses 20a and 20b, passing bolt 40 through lug 32d for threaded engagement with transmission housing lug 20c, and snapping snap fittings 60e and 72 respectively over ball fitting 22a on the free end of mode select lever 22 and a ball fitting 24a on the free end of kick-down lever 24. As the lever assembly 46 is connected to the mode select lever, lever sections 60a and 60b of lever 60 move telescopically and selectively relative to each other to provide the precise effective length of length 60 to allow positive snapping engagement of snap fitting 60e over ball 22a irrespective of manufacturing tolerances, whereafter nut 64 is tightened to lock the lever 60 in its precise adjusted position.

Installation of control module 30 in instrument panel 10 is affected simply by moving the control module from the rear of the panel into the opening 10a and fastening the module in place by the use of fasteners 96 or the like. Following the plugging of plugs 90 and 94 into plugs 114 and 116 and the plugging of plugs 110 and 118 into connector terminals 106 and 108, the system is operational and ready for use.

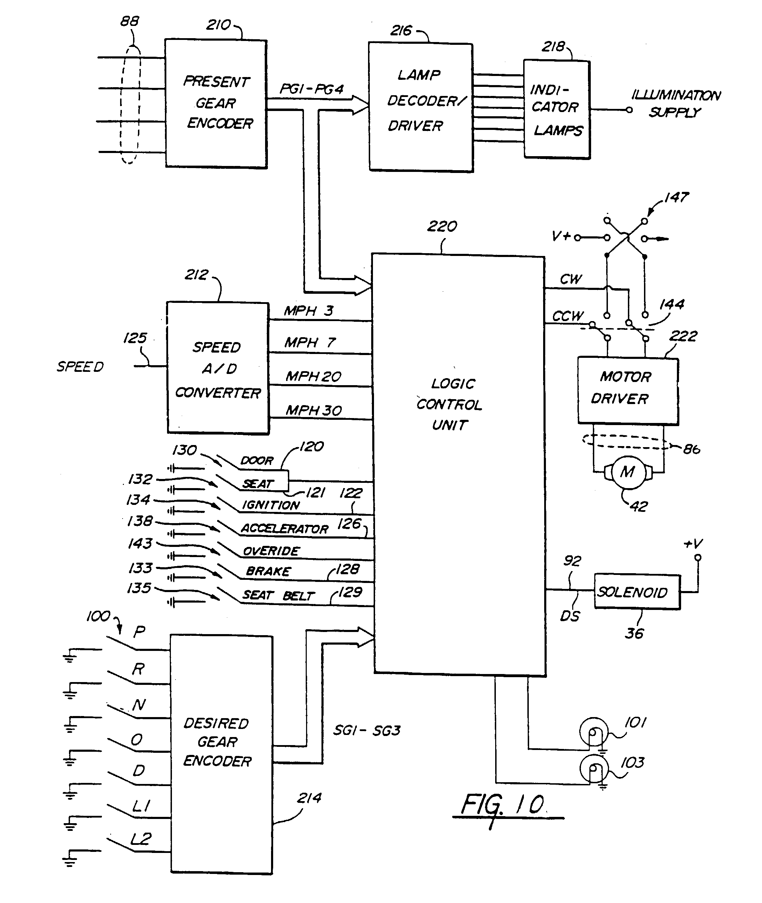

Figure 10 illustrates a schematic block diagram of the electrical control system of the present invention. This block diagram includes present gear encoder 210, speed analog-to-digital converter 212, desired gear encoder 214, lamp decoder/driver 216, indicator lamps 218, logic control unit 220 and motor driver circuit 222.

Present gear encoder 210 is connected to the lines 88 which are output of the encoder assembly 73, described above. Present gear encoder 210 includes one or more integrated circuits to encode the output signal from encoder assembly 73 into four signals PG1 to PG4. This encoding takes place, for example, in accordance with the coding table listed at Table 1.

**Table 1**

| | PG1 | PG2 | PG3 | PG4 |
|---|---|---|---|---|
| Park | 0 | 0 | 0 | 1-0 |
| Reverse | 1 | 0 | 0 | 1-0 |
| Neutral | 1 | 1 | 0 | 1-0 |
| Overdrive | 0 | 1 | 0 | 1-0 |
| Drive | 0 | 1 | 1 | 1-0 |
| Low1 | 1 | 1 | 1 | 1-0 |
| Low2 | 1 | 0 | 1 | 1-0 |

Each unique combination of signals PG1, PG2 and PG3 indicates the angular range for a corresponding gear. Figure 15 illustrates a roostertail control member 224 of known form connected to tubular shaft 27 and positioned within the transmission housing. As seen in Figure 15, the signal PG4 is used to indicate the exact center of any particular gear range as represented by positioning of the usual spring loaded follower 226 in the precise dead center of the valley of the roostertail corresponding to the particular gear being selected. The encoder assembly 73 causes signal PG4 to change from "1" to "0" when the exact center of the angular range of the selected gear is reached. When this transition in PG4 is detected, then the signals PG1, PG2 and PG3 are latched into the logic. This encoding technique ensures the mode select lever 22 is precisely positioned when the DC electric motor 42 is stopped. As a consequence the transmission is reliably positioned in the desired gear at the bottom of the valley of the roostertail corresponding to the desired gear. For example, as seen in Figure 15, when R is selected by the vehicle operator, the described encoding technique ensures that the follower 226 comes to rest at the angular position 228 corresponding to bottom dead center of the roostertail valley corresponding to the reverse gear mode of the transmission.

Speed analog-to-digital converter 212 receives an analog signal indicative of speed on line 125. Speed analog-to-digital converter 212 generates an output signal on one or more of the output lines MPH3, MPH7, MPH20 and MPH30, depending upon the magnitude of the analog speed signal.

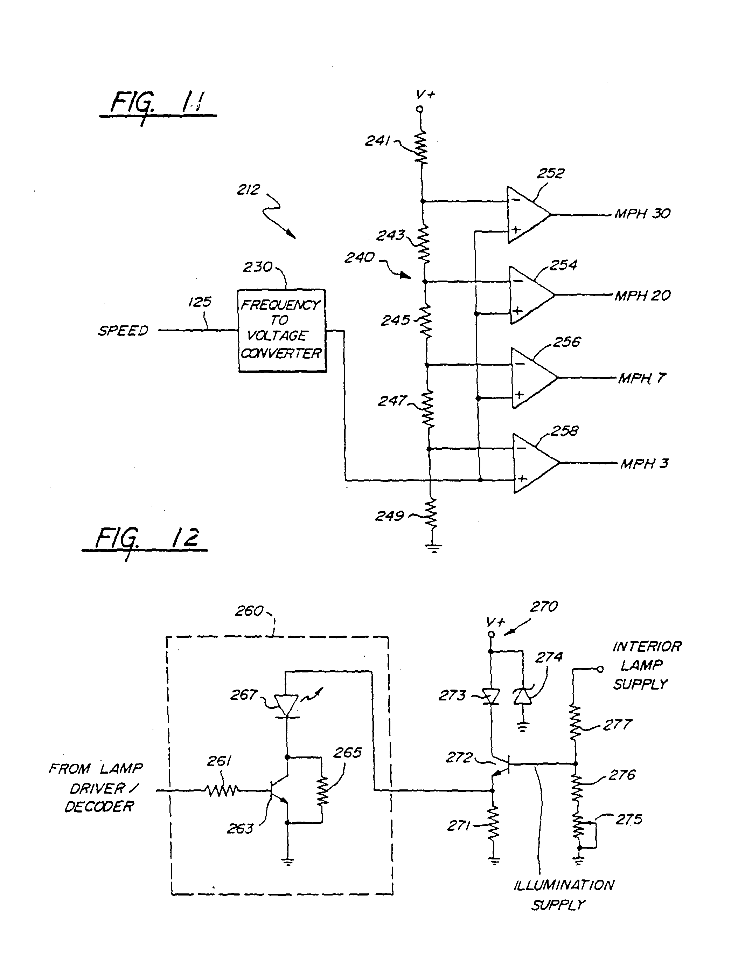

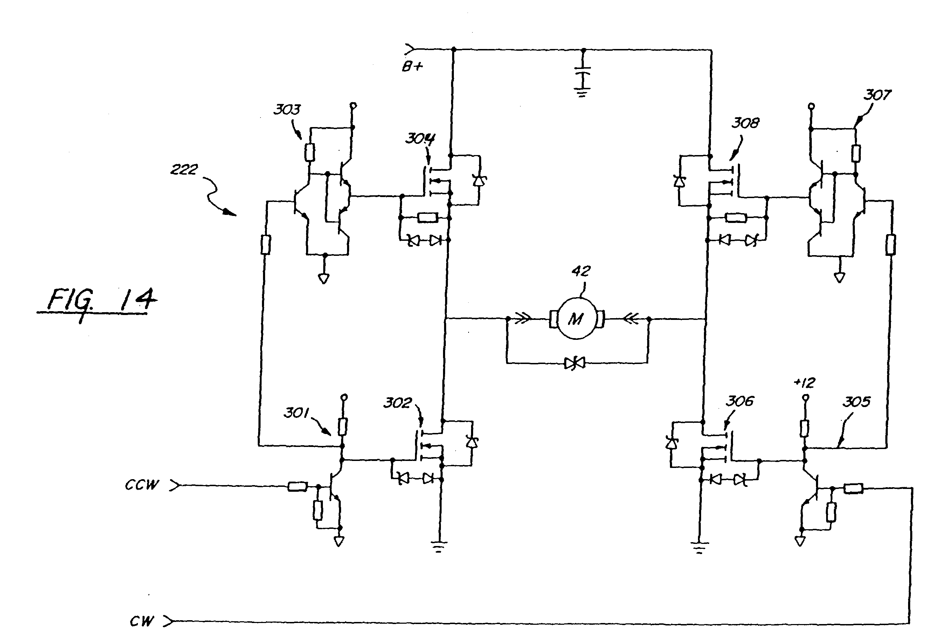

Figure 11 illustrates in schematic form the preferred construction of speed analog-to-digital converter 212. In accordance with the preferred embodiment the speed signal comes from an existing sensor on the vehicle which generates an oscillating signal having a frequency proportional to the vehicle speed. The speed signal is applied to a frequency-to-voltage converter 230 and then to the positive input of each of a set of comparators 252, 254, 256 and 258. A voltage divider circuit 240 comprising resistors 241, 243, 245, 247 and 249 is connected between the positive supply voltage and ground. The node between resistors 241 and 243 is connected to the negative input of comparator 252; the node between resistors 243 and 245 is connected to the negative input of comparator 254; the node between resistors 245 and 247 is connected to the negative input of comparator 256; and the node between resistors 247 and 249 is connected to the negative input of comparator 258. Each of these comparator circuits 252 to 258 receives a reference voltage for comparison to the output from frequency-to-voltage converter 230. If the output from frequency-to-voltage converter 230 is greater than the reference voltage applied to comparator 252, this indicates a vehicle speed of greater than 30 miles per hour. Accordingly, the output of comparator 252 is the MPH30 signal. Similarly, comparator 254 generates a signal at output MPH20 when the voltage at the output of frequency-to-voltage converter 230 indicates a vehicle speed of greater than 20 miles an hour. Comparator 256 generates an output MPH7 when the input indicates a vehicle speed of greater than seven miles per hour. Lastly, comparator 258 generates an output MPH3 when the speed input signal indicates a vehicle speed of greater than three miles per hour. Each of these four digital speed signals are supplied to logic control unit 220, to be used in a manner which will be further disclosed below. Desired gear encoder 214 is coupled to the plurality of push-buttons 100 employed to select the desired gear. Desired gear encoder 214 includes one or more integrated circuits which encode the last actuated switch 100 into a three-bit signal on lines SG1 to SG3. This encoding takes place, for example, in accordance with the coding table listed at Table 2.

**Table 2**

| | SG1 | SG2 | SG3 |
|---|---|---|---|
| Park | 1 | 1 | 1 |
| Reverse | 1 | 1 | 0 |
| Neutral | 1 | 0 | 1 |
| Overdrive | 1 | 0 | 0 |
| Drive | 0 | 1 | 1 |
| Low1 | 0 | 1 | 0 |
| Low2 | 0 | 0 | 1 |

A bus of these three lines SG1 to SG3 is supplied from desired gear encoder 214 to logic control unit 220. This bus indicates to logic control unit 220 the desired transmission state selected by the operator.

Desired gear encoder 214 is responsive the to push buttons 100 and generates the encoded desired gear signal on lines SG1 to SG3. Because it is possible for the operator to inadvertently or deliberately press more that one of the push buttons, desired gear encoder provides a priority to some desired gears over other desired gears. In accordance with the preferred embodiment of the present invention, the order of priority is: park; reverse; neutral; overdrive; drive; low2; and low1. In accordance with one embodiment of the present invention desired gear encoder 214 is embodied by a Fairchild 9318 priority encoder. Coupling of the input leads from the plural push-buttons 100 to the appropriate inputs of this device results in the generation of the output code corresponding to the highest priority push-button 100 pressed.

Lamp decoder/driver 216 receives the encoded present gear signal on the bus including the lines PG1 to PG4. Lamp decoder/driver 216 generates a signal to illuminate a single light of indicator lamps 218. In accordance with the preferred embodiment of the present invention each of the lamps of indicator lamps 218 is associated with one of the push-button switches 100. In particular, it is desirable that push-buttons 100 comprise lighted push-button switches with the indicator lamps enclosed therein. The individual indicator lamps are preferably connected to the illumination supply in a manner that enables the intensity of these lamps to be adjusted in accordance with the adjustment of the intensity of the interior instruments.

Figure 12 illustrates circuit 260 of a typical indicator lamp 267. In this illustration indicator lamp 267 is a light emitting diode. A resistor 261 is connected to lamp decoder/driver 216 for supplying a bias current to the base of transistor 263. When transistor 263 is turned on lamp 267 shines with a first brightness. When transistor 263 is turned off resistor 265 carries the current through lamp 267, so that lamp 267 is illuminated with a second, lower intensity. The voltage supplied to lamp 267 comes from power supply 270. The interior lamp supply is applied to a voltage divider including potentiometer 275, and resistors 276 and 277. The voltage appearing at the node between resistors 276 and 277 depends upon the setting of potentiometer 275. This voltage supplies a base current to transistor 272 which is connected in an emitter follower circuit. The emitter current from transistor 272 flows through the selected lamp and through resistor 271. Diode 273 provides reverse voltage protection for transistor 272. Zener diode 274 supplies over voltage protection for transistor 272. In accordance with the preferred embodiment, adjustment of the instrument intensity via potentiometer 275 adjusts the intensity of the illumination of the indicator lamps 218.

Additional switches are connected to logic control unit 220. These include door switch 130, which indicates the open/closed status of the driver's door, seat switch 132 indicating whether or not the driver's seat is occupied, ignition switch 134 indicating the status of the ignition switch, accelerator switch 138 which indicates the full depression of accelerator pedal 138 and override switch 143. Brake switch 133 indicates the depression of the brake pedal and seat belt switch 135 indicates the closure of the driver's seat belt. Logic control unit 220 receives the above described input signals and generates three output signals. These include the clockwise motor drive signal and the counter-clockwise motor drive signal which are connected to motor driver circuit 220. In addition a down shift signal 92 is connected to solenoid 36 for effecting the down shifting of the transmission via kick-down lever 24.

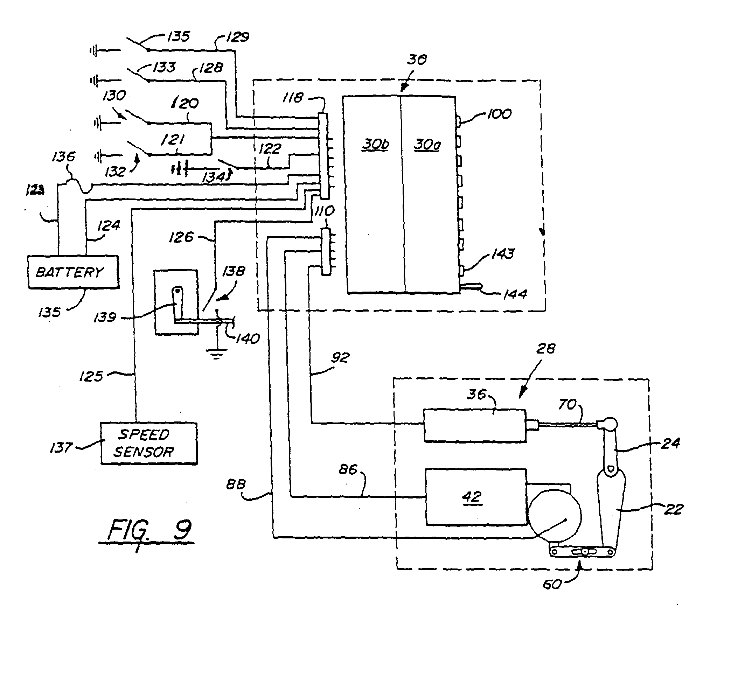

In use various input signals, such as described above and illustrated in Figures 9 and 10, are supplied to logic control unit 220. Logic control unit 220 is configured to receive these input signals and generate the necessary drive signals to motor 42 and solenoid 36 for providing the selection of the desired gear. Logic control unit 220 is preferably constructed of a programmed microprocessor circuit. It is also possible to construct logic control unit 220 in hardware logic in a programmable logic array or a gate array. The following description of the action of logic control units 220 is made in relation to Boolean equations. Those skilled in the art of the electronic controls would understand that it is equally possible to perform these Boolean operations with a programmable microprocessor circuit or with the logic circuits of a programmable logic array or gate array.

The operation of logic control unit 220 will now be described. Firstly, the various input signals are formed into a set of logic signals. The signals SG1 to SG3 are decoded into a set of signals whose state is selected by the depressed push-button 100; PARK, RVRS, NTRL, OVDR, DRVE, LOW1 AND LOW2. One of these signals, corresponding to the desired gear selected by the depressed push-button, is a logic "1" while the other of these signals are a logic "0". Similarly the encoder signals PG1 to PG4 permit generation of a set of logic signals PGP, PG4, PGN, PGO, PGD, PGL1 and PGL2, one of which is active to indicate the present gear and the others of which are inactive. This encoding and decoding technique is employed to reduce the number of lines required between the various circuits and to reduce the number of input lines to be connected to logic control unit 220. Logic control unit 220 receives the speed logic signals MPH3, MPH7, MPH20 and MPH30 from speed analog-to-digital converter 212. Logic control unit 220 forms signals from the additional inputs including DOOR indicating the opened/closed status of the driver's door via door switch 130, SEAT indicating whether or not the driver's seat is occupied via seat switch 132, IGN indicating the status of the ignition switch, ACC indicating whether or not the accelerator switch 138 is closed, OVRD indicating override via switch 143, BRAKE indicating depression of the brake pedal via switch 133 and SBELT indicating the closure of the driver's seat belt via switch 135.

Logic control unit 220 serves to compare the inputs indicating the desired gear with the inputs indicating the present gear. If they differ, then logic control unit 220 generates an output signal to motor 42 to rotate the motor until the present gear matches the desired gear. This process includes an indication of which shifts are upshifts (counter-clockwise motor rotation) and which are down shifts (clockwise motor rotation) according to the following Boolean equations:
UP1 = PGL1
UP2 = PGL2 and Not (LOW1)
UP3 = PGD and (not (LOW2) and Not (LOW1) )
UP4 = PGO and ( NTRL or RVRS or PARK )
UP5 = PGN and ( RVRS or PARK )
UP6 = PGR and PARK
UPSHFT = UP1 or UP2 or UP3 or UP4 or UP5 or UP6
DNSHFT = Not (UPSHFT)
Thus an up shift is required if the present gear is low1 (UP1), or the present gear if low2 and low1 is not requested (UP2), or the present gear is drive and neither low1 nor low2 are requested (UP3), or the present gear is overdrive and either neutral, reverse or park is selected (UP4), or the present gear is neutral and either reverse or park is selected (UP5), or the present gear is reverse and park is selected. A down shift is requested if none of the intermediate states are satisfied, that is the inverse of UPSHFT.

Two motor control signals CCW and CW are generated when the signals ENABLE and OK2SHFT are active and the respective UPSHFT or DNSHFT is active and shown below.
CCW = ENABLE and OK2SHFT and UPSHFT
CW = ENABLE and OK2SHFT and DNSHFT
The ENABLE signal generally requires the desired gear to differ from the present gear and certain safety conditions to be satisfied. As shown below, ENABLE is inactive when the desired gear is the same as the present gear.
ENABLE = GOLOW1 or GOLOW2 or GODRVE or GOOVDR
or GONTROL or GORVRS or GOPARK These intermediate signals are formed as follows:
GOLOW1 = LOW1 and Not (PGL1) and Not(MPH30)
GOLOW2 = LOW2 and Not(PGL2) and Not(MPH20)
GODRVE = DRVE and Not(PGD)
GOOVDR = OVDR and Not(PGO)
GONTRL = NTRL and Not(PGN)
GORVRS = RVRS and Not(PGR) and Not(MPH7)
GOPARK = ( PARK and Not (PGP) and Not(MPH3) ) or ( ( ( Not(IGN) or ( Not (DOOR) and Not(SEAT) ) ) and Not(PGP) and Not(MPH3) and Not(OVRD) ) )
Thus the logic control unit 220 does not permit a shift into low1 when the speed is in excess of 30 miles per hour, and likewise does not permit a shift to low2 if in excess of 20 miles per hour, to reverse if in excess of 7 miles per hour, or to park if in excess of 3 miles per hour. The second term in GOPARK automatically shifts to park if the ignition is switched off (Not(IGN)), or if the door is opened (Not(DOOR)) and the seat is empty (Not(SEAT)), the present gear is not park (Not(PGP)), the speed is not greater than 3 miles per hour (Not(MPH3)), and neutral override is not selected (Not(OVRD)).

The signal OK2SHFT is a safety lockout signal. It is formed as follows:
OK2SHFT = ( (IGN and SEAT) or OVRD) and
Not(PGR and MPH7)
Thus OK2SHFT permits shifts if the ignition switch is enabled and the driver's seat is occupied, or if a gear is selected and the override switch 143 is activated. In either event shifts are not permitted if the transmission is currently in reverse gear and the vehicle speed is above 7 miles per hour. If desired OK2SHFT may also require connection of the driver's seat belt to enable any shift via the SBELT signal. Also, it may be desired to require depression of the brake to leave PARK gear by adding a term ( Not(PGP) and Not(BRAKE) ) to the equation for OK2SHFT.

It is feasible to combine the priority encoding operation of desired gear encoder 214 with the logic functions of logic control unit 220 in a single logic unit. This is achieved with an additional layer of priority determination logic as follows. The desired gear signals PARK, RVRS, NTRL, OVDR, DRVE, LOW1 and LOW2 are generated in parallel as before with the understanding that more than one of these signals may be a logic "1" indication the depression of more than one of push-buttons 100. The signals GOLOW1, GOLOW2, GODRVE, GOOVDR, GONTRL, GORVRS and GOPARK are formed as previously indicated. This includes the safety lockout features previously described. The priority function is achieved as follows. The raw selected gear outputs PARK, RVRS, NTRL, OVDR, DRVE, LOW1 and LOW2 are combined with the signals GOLOW1, GOLOW2, GODRVE, GOOVDR, GONTRL, GORVRS and GOPARK. This process involves the formation of three intermediate signals A1LOGIC, A2LOGIC and A3LOGIC as follows:
- A1LOGIC =: ( GORVRS and Not(PARK) ) or
( GONTRL and Not(RVRS) and Not(PARK) ) or
( GOLOW2 and Not(DRVE) and Not(OVDR) and
Not(NTRL) and Not(RVRS) and Not(PARK) ) or
( GOLOW1 and Not(LOV2) and Not(DRVE) and
Not(OVDR) and Not(NRTL) and Not(RVRS) and
Not(PARK) )
- A2LOGIC =: ( GONTRL and Not(PARK) and Not(RVRS) ) or
( GOOVDR and Not(NTRL) and Not(RVRS) and
Not(PARK) ) or
( GODRVE and Not(OVDR) and Not(NTRL) and
Not(RVRS) and Not(PARK) ) or
( GOLOW2 and Not(DRVE) and Not(OVDR) and
Not(NTRL) and Not(RVRS) and Not(PARK) )
- A3LOGIC =: GOLOW1 and Not(LOW2) and Not(DRVE) and
Not(OVDR) and Not(NTRL) and Not(RVRS) and
Not(PARK)
From these intermediate signals a set of prioritized desired gear signals PARKZ, RVRSZ, NTRLZ, OVDRZ, DRVEZ, LOW1Z and LOW2Z are formed as follows:
PARKZ = Not(A1LOGIC) and Not(A2LOGIC) and Not(A3LOGIC)
RVRSZ = (A1LOGIC) and Not(A2LOGIC) and Not(A3LOGIC)
NTRLZ = (A1LOGIC) and (A2LOGIC) and Not(A3LOGIC)
OVDRZ = Not(A1LOGIC) and (A2LOGIC) and Not(A3LOGIC)
DRVEZ = Not(A1LOGIC) and (A2LOGIC) and (A3LOGIC)
LOW2Z = (A1LOGIC) and (A2LOGIC) and (A3LOGIC)
LOW1Z = (A1LOGIC) and Not(A2LOGIC) and (A3LOGIC)
This table is constructed so that one and only one of these prioritized desired gear signals PARKZ, RVRSZ, NTRLZ, OVDRZ, DRVEZ, LOW1Z and LOW2Z is generated if any push-button 100 is depressed regardless of how many of push-buttons 100 are depressed. This technique implements the same hierarchy of priority as previously described. The signal ENABLE is then formed from the set of prioritized desired gear signals PARKZ, RVRSZ, NTRLZ, OVDRZ, DRVEZ, LOW1Z and LOW2Z as follows:
- ENABLE =: ( PARKZ and Not(PGP) ) or
( RVRSZ and Not(PGR) ) or
( NTRLZ and Not(PGN) ) or
( OVDRZ and Not(PGO) ) or
( DRVEZ and Not(PGD) ) or
( LOW1Z and Not(PGL1) ) or
( LOW2Z and Not(PGL2) )
Other aspects of the logic control function are as previously described.

Logic control unit 220 controls error lamp 103. Error lamp 103 is illuminated when an improper shift is requested. As noted above there are various lock out conditions employed to prevent a shift, most notably the request to shift to a gear while the vehicle speed exceeds a predetermined limit for that gear. Error lamp 103 is illuminated when at least one of the desired gear signals PARK, RVRS, NTRL, OVDR, DRVE, LOW1 and LOW2 is generated and ENABLE is not generated. Thus ERROR is formed as follows:
ERROR = ( PARK or RVRS or NTRL or OVDR or DRVE or LOW1
or LOW2 ) and Not(ENABLE) The error lamp 103 is illuminated when the ERROR signal is generated.

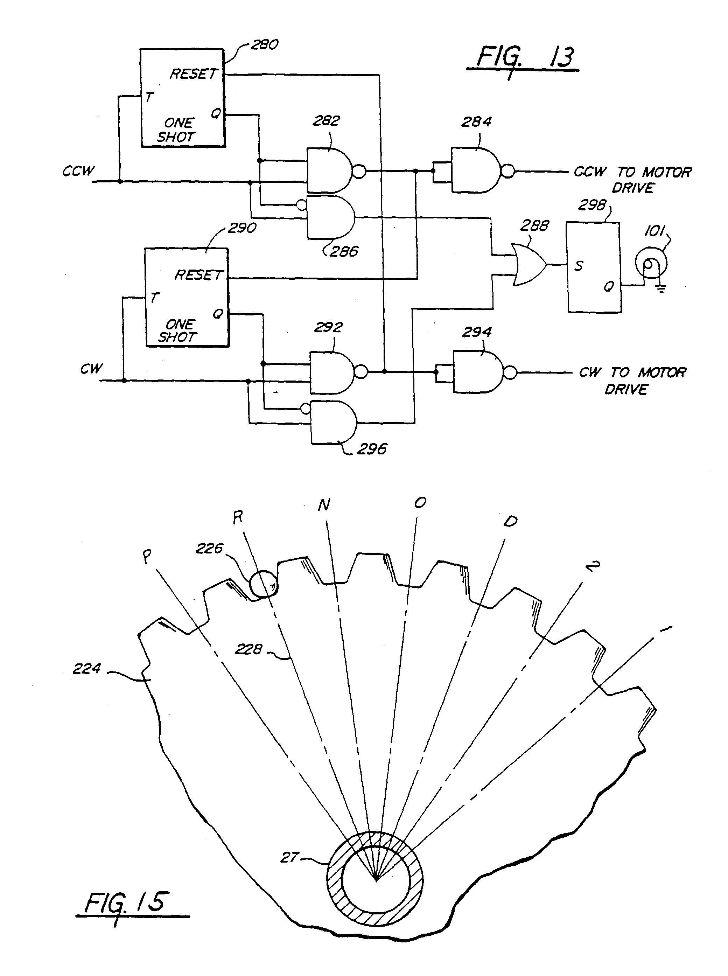

The clockwise motor drive signal CW and the counter-clockwise motor drive signal CCW are generated by logic control unit 220 in accordance with the above Boolean equations. These signals are then conditioned via a one shot circuit before being applied to motor driver circuit 222. These one shot circuits are illustrated in Figure 13. The counter-clockwise motor drive signal CCW is applied to the trigger input of one shot circuit 280 and one input of gate 282. Upon generation of this counter-clockwise motor drive signal CCW the state of one shot 280 is toggled to enable gate 282. At the same time, the output of NAND gate 282 is applied to the reset input of one shot 290, insuring that NAND gate 292 is cut off and the clockwise motor drive signal CW is inhibited. This signal is inverted via gate 284 and then applied to the motor driver circuit 222 in the manner illustrated in Figure 15. When a predetermined period of time has elapsed one shot 280 reverses state. This serves to disable NAND gate 282 and stop the generation of the counter-clockwise motor drive signal CCW. This also removes the input to reset one shot 290, thereby permitting later generation of the clockwise motor drive signal CW. The length of time of one shot circuit 280 is set to be longer than the longest time for ordinary shifting. Thus if this time is exceeded some error condition has resulted and it is best to remove the motor drive from motor 42. A similar one shot circuit 290 operates on the clockwise motor drive signal CW utilizing NAND gate 292 and 294. The output of NAND gate 292 is also applied to the reset input of one shot 280 insuring that NAND gate 282 is cut off when the clockwise motor drive signal CW is generated. This prevents simultaneous generation of the clockwise motor drive signal CW and the counter clockwise motor drive signal CCW.

Logic control unit 220 controls fault lamp 101. Fault lamp 101 is illuminated when either of the one shot circuits 280 or 290 is tripped while the corresponding motor drive signal is active. This indicates that the transmission has taken longer than the period of the respective one shot circuit interval to reach the desired gear, indicating some sort of fault in the system. As illustrated in Figure 13, the Q output of one shot 280 is connected to an inverting input of AND gate 286. The counter-clockwise motor drive signal CCW in connected to and noninverting input of AND gate 286. Thus AND gate 286 produces an output only if one shot 280 times out while the counter-clockwise motor drive signal CCW is active. AND gate 296 is similarly connected to the Q output of one shot 290 and clockwise motor drive signal CW to produce an output only if one shot 290 times out while the clockwise motor drive signal CW is active. On the occurrence of either time out OR gate 288 trips flip flop 298 to illuminate fault lamp 101. This presents an indication of the fault condition to the operator.

A pair of switches enable the transmission to be shifted manually. Auto/Manual switch 144 switches between the signals generated by logic control unit 220 and jog switch 147. In normal use auto/manual switch 144 is in the auto position illustrated in Figure 10 in which the clockwise motor control signal CW and the counter clockwise motor control signal CCW generated by logic control unit 220 are coupled to motor driver circuit 222. In this position logic control unit 220 controls motor driver circuit 222 in accordance with the principles of the present invention explained herein. When auto/manual switch 144 is in the manual position, signals from jog switch 147 are coupled to motor driver circuit 222.

This jog switch 147 is preferably a double pole double throw momentary contact switch with a center off position. Momentary actuation of jog switch 147 in one direction causes generation of the clockwise motor drive signal CW, in the same manner as generated by logic control unit 220. Similarly, momentary actuation of jog switch 147 in the opposite direction generates the counter-clockwise motor drive signal CCW. These signals are applied to motor driver circuit 222 in the manner similar to the signals received from logic control unit 220. Jog switch 147 thus permits the user of the motor vehicle to change the state of the automatic transmission in the event of some failure of the electrical control system.

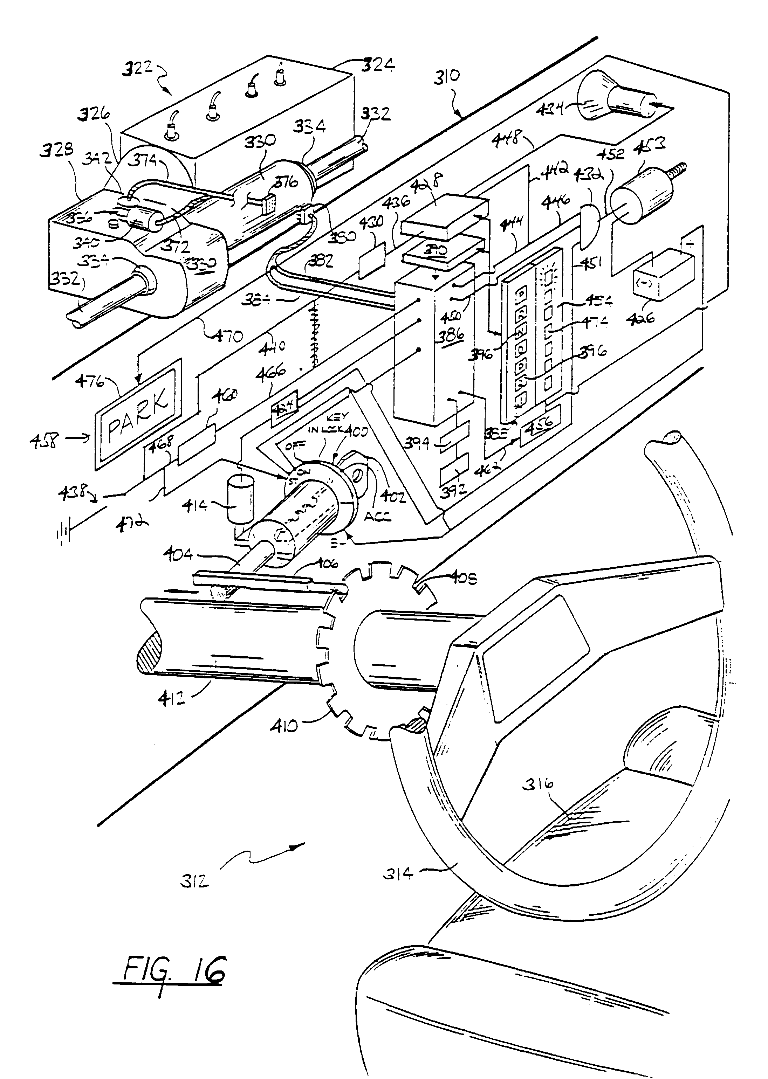

Motor driver circuit 222 is illustrated in detail in Figure 14. The counter-clockwise motor drive signal CCW is applied to invertor 301. The output of invertor 301 is applied to switch 302 and to invertor 303. The output of buffer 303 is applied to switch 304. In a similar manner the clockwise motor control signal CW is applied to the input of invertor 305. The output of invertor 305 is applied to switch device 306. The output of invertor 305 is also applied to the input of invertor 307, which supplies the input to switch device 308.

Motor 42 is connected in an H bridge circuit between switch devices 302, 304, 306 and 308. Both clockwise motor drive signal CW and counter-clockwise motor drive signal CCW are normally inactive at a low voltage. Thus the output of invertor 301 is high and switch device 302 is conductive and switch device 304 is not conductive. Similarly, switch device 306 is normally conductive and switch device 308 is normally not conductive. Thus both terminals of motor 42 are connected to ground.

Upon receipt of an active counter-clockwise motor drive signal CCW invertor 301 switches states. Thus switch device 304 is turned on and switch device 302 is turned off. Because switch device 306 remains on, a current flows through motor 42 in a first direction through switch devices 304 and 306. When the desired shift position is reached, counter-clockwise motion drive signal CCW returns to the inactive low state. Thus switch device 302 is turned on and switch device 304 is turned off. Dynamic braking is achieved because both terminals of motor 42 are connected to ground (note switch device 306 has remained conductive during this sequence).

When clockwise motor drive signal CW is active, switch device 306 is turned off and switch device 308 is turned on. This causes a current to flow through motor 42 in the opposite direction through switch device 308 and switch device 302. Likewise when the clockwise motor drive signal CW ceases motor 42 is dynamically braked by both terminals being connected to ground. Thus motor 42 is controlled to rotate clockwise or counter-clockwise in accordance with the signal supplied from logic control unit 220. Motor control circuit 222 illustrated in Figure 14 also includes a feature for dynamically breaking motor 42 when neither the counter-clockwise motor control signal CCW nor the clockwise motor control signal CW is generated.

As soon as the instantaneous encoder signal transmitted by pick-up device 76 matches the signal generated by the specific depressed push button, logic control unit 220 of control module 10 functions to de-energize and brake the motor so that the mode select lever 22, and thereby the transmission, is stopped precisely in the selected shift position.

If at any time the operator desires to downshift the transmission as, for example, in a passing situation, the accelerator pedal 14 is fully depressed to close switch 138. A signal from the closed switch 138 is transmitted to logic control unit 220 by lead 126 where it is amplified by a buffer device 142 carried by printed circuit 104 and transmitted in amplified form through lead 92 to solenoid 36 which is thereby energized to retract the plunger of the solenoid and pivot downshift lever 24 in a counter-clockwise direction, as viewed in Figure 9, to effect the desired downshifting of the transmission.

As previously described, the invention system would also preferably include illumination means for the push buttons 100 with the intensity of the illumination controlled by the usual dash dimmer and with the button corresponding to the present gear being illuminated brighter than the remaining buttons to provide a ready indication of the instantaneous position of the transmission. An override push button 143 is also provided as a part of push button submodule 30a. Override push button 143 allows the selection of any gear when it is necessary for the seat to be empty and the vehicle to be in a gear other than PARK, for example, during vehicle tune-up, vehicle car wash, et cetera.

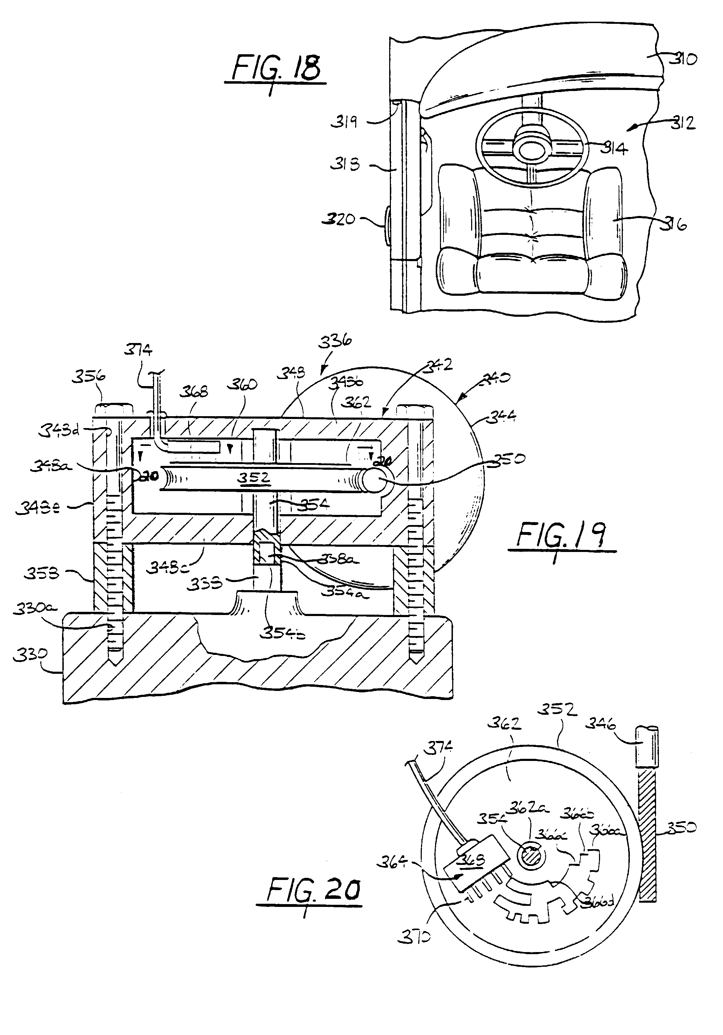

The modified invention control system of the Figures 16-20 embodiment is seen schematically in Figures 16 and 18 in association with a motor vehicle of the front wheel drive type and including an instrument panel assembly 310 positioned within the passenger compartment 312 of the motor vehicle; a steering wheel 314 associated with the instrument panel; an operator seat 316; a door 318 mounted for pivotal opening and closing movement about a front hinge axis 319 and having a door handle 320 actuating a door latching mechanism (not shown) of known form to allow pivotal opening movement of the door about hinge axis 319 in response to movement of handle 20; and a front wheel drive assembly 322.

Front wheel drive assembly 322 includes an internal combustion engine 324 mounted transversely in the engine compartment of the vehicle, a torque converter 326 driven by engine 324, a gear drive assembly 328, an automatic transmission 330, drive shafts 332 drivingly connected to the opposite ends of transmission 330 by joints 334, and a power module 336.

As seen in Figure 19, transmission 330 includes a mode select shaft 338 having a free upper end positioned above the housing of the transmission and operable in response to rotation of the shaft to operate internal devices within the transmission to position the transmission in a plurality of transmission shift modes such as park, neutral, drive, etc.

Power module 336 is adapted to be bolted to transmission housing 330 in proximity to mode select shaft 338 and includes a DC electric motor 340 and a speed reduction unit 342.

Motor 340 is a direct current motor having, for example, an output torque rating of 200-inch pounds and includes a housing 344 and an output shaft 346.

Speed reduction unit 342 includes a housing 348 fixedly secured to motor housing 344 and defining an internal cavity 348a; a worm gear 350 formed as a coaxial extension of the motor output shaft and extending into cavity 348a; a worm wheel 352 positioned in cavity 348a and driven by worm gear 350; and an output shaft 354 driven by worm wheel 352, journalled in housing walls 348b and 348c, and including a free lower end 354a positioned outside of and below housing wall 348c. Shaft lower end 354a includes a D-shaped opening 354b for driving coupling receipt of the D-shaped upper end portion 338a of mode select shaft 338.

Power module 336 is mounted on the upper face of transmission housing 330 by a plurality of bolts 356 passing downwardly through bores 348d in lug portions 348e of reduction unit housing 348 and downwardly through spacers 358 for threaded receipt in tapped bores 330a in transmission housing 330. In assembled relation, reduction unit output shaft 354 is coaxially aligned with mode select shaft 338 and D opening 354b in reduction unit shaft lower end 354a telescopically receives D-shaped upper end 338a of mode select lever 338 so that actuation of motor 340 acts through worm shaft 350, worm wheel 352, and reduction unit output shaft 354 to drive transmission mode select shaft 338.

Power module 336 further includes an encoder assembly 360, seen in Figures 19 and 20, operative to sense the instantaneous shift position of the transmission and generate an encoded signal representative of the sensed shift position.

Encoder assembly 360 includes an encoder wheel 362 and a pickup device 364. Encoder wheel 362 may be formed for example of a suitable plastic material and is secured to the upper side face of worm wheel 352 within reduction unit housing chamber 348a. Encoder wheel 362 includes a central aperture 362a passing reduction unit output shaft 354 and further includes code indicia 366 provided on the exposed face of the wheel and arranged along four arcuate indicia tracks 366a, 366b, 366c and 366d centered on the center line of the encoder wheel.

Pickup device 364 includes a plastic body member 368 mounting a plurality of flexible resilient contact fingers 370 for respective coaction with indicia tracks 366a, 366b, 366c and 366d. In addition to the four fingers 370 for respective engagement with the four indicia tracks, a fifth finger is provided to provide a ground for the system. A lead 372 from motor 340 and a lead 374 from pickup device 364 are combined into a pin-type plug 376 (Figure 16).

Plug 376 is adapted for plugging coaction with a plug 380 connected to wires 382 and 384 corresponding respectively to wires 374 and 372, and wires 382 and 384 are connected to a logic control unit 386 which may be mounted for example within the vehicle instrument panel 340. Logic control unit 386 may be constructed for example as a programmable logic array or a gate array or, preferably, may be constructed as a programmed microprocessor circuit. As previously explained in relation to the control system of Figures 1-15, the logic control unit may function on the basis of Boolean equations which can be embodied in the logic circuits of a programmable microprocessor circuit. Those skilled in the art will understand that it is equally possible to perform the same Boolean operations with a programmable logic array or gate array.

The invention control system also includes a push button module 388, a desired gear encoder 390, a speed sensor 392, and an analog to digital speed decoder 394.

Push button module 388 includes a plurality of push buttons 396 positioned in vertically spaced relation in the front face of the module and corresponding to the available transmission shift modes. Specifically, buttons 396 include buttons corresponding to park, reverse, neutral, overdrive, drive, second and first shift positions for the transmission. The specific output from push button module 388, as determined by the specific button depressed by the vehicle operator, is transmitted to desired gear encoder 390 which functions in known manner to generate a signal for transmission to logic control unit 386 with the specific transmitted signal corresponding, in coded language, to the specific gear selected by operator depression of the specific push button of the push-button module.

Speed sensor 392 functions in known manner to provide analog information with respect to the instantaneous speed of the vehicle and analog to digital speed decoder 394 receives the analog input from speed sensor 392 and generates a plurality of desired speed signals, for example, MPH3, MPH7, MPH20, and MPH30 for transmission to logic control unit 386. Analog to digital speed decoder 394 produces each speed signal MPH3, MPH7, MPH20 and MPH30 as a digital signal of a first type when the analog information from speed sensor 392 indicates a vehicle speed less than a corresponding predetermined vehicle speed, and as a digital signal of the opposite type when the analog information from speed sensor 392 indicates a vehicle speed greater than the corresponding predetermined vehicle speed. The plurality of speed signals generated by speed decoder 394 provide a plurality of threshold vehicle speed signals for use by the logic control unit in deciding whether a requested shift is allowable in view of the instantaneous speed of the vehicle. The selected threshold vehicle speed signals will of course vary depending upon the particular vehicular application.

In the general operation of the electrical shift control system, a signal from the operator, as originated by depression of the appropriate push button 396 of the push-button module 388, is relayed to the desired gear encoder 390 and thence to the logic control unit 386 which compares the desired shift signal to the present gear encoder signal as provided from encoder 360 via line 374 and, if the desired signal differs from the present signal and the threshold speed signal MPH3, MPH7, MPH20 and MPH30 being supplied by speed decoder 394 indicates that the desired shift is permissible, transmits a signal through line 372 to motor 340 to rotate the motor in a clockwise or counterclockwise direction and thereby rotate mode select shaft 38 of the transmission to shift the transmission to the desired position. The manner in which push-button module 388, power module 336, logic control unit 386, speed sensor 392, speed decoder 394, and desired gear encoder 390 coact to achieve the shifting of the transmission in accordance with the requested signals as provided by operator input to the push-button module have been previously explained in relation to the control system of Figures 1-15.

In accordance with one aspect of the modified invention control system, means are provided to preclude inadvertent locking of the steering column of the vehicle with the vehicle in motion.

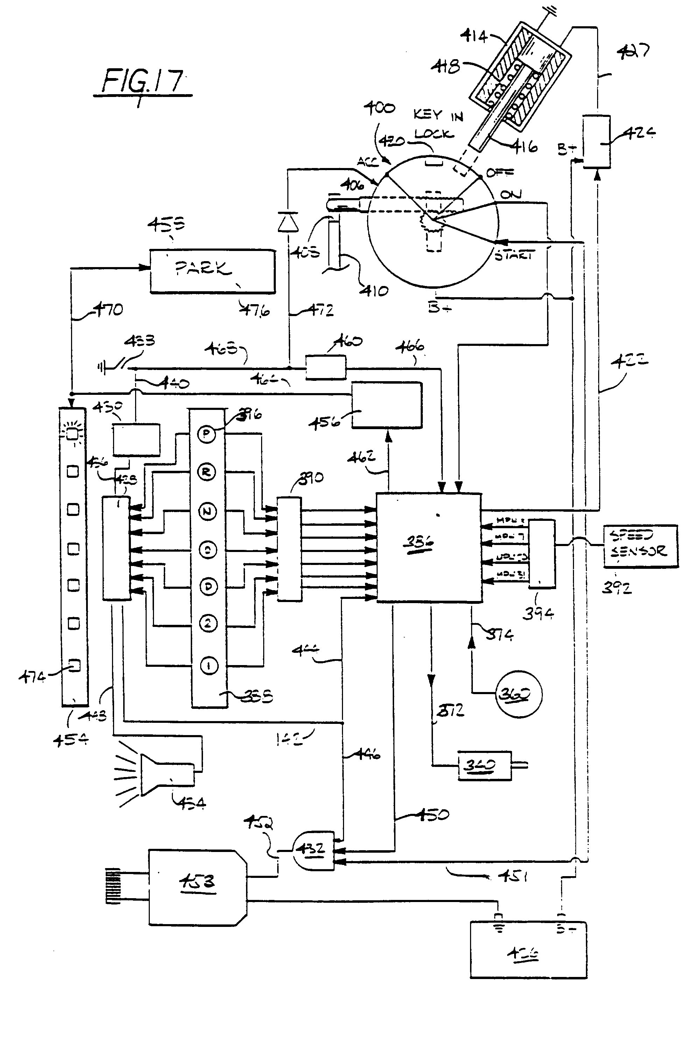

As best seen in Figures 16 and 17, the motor vehicle, in accordance with standard practice, is provided with an ignition switch 400 having standardized positions. Specifically, ignition switch 400, proceeding in clockwise fashion as viewed in Figure 17, has an accessory position, a key-in/lock position, an off position, an on position, and a start position. The ignition switch also includes, in accordance with standard practice, means to lock the steering column when the ignition switch is moved to the key-in/lock position. Specifically, as the key 402 is rotated in the ignition switch to turn the tumbler of the switch, a shaft 404 is concomitantly rotated. Shaft 404 provides the pinion of a rack and pinion unit with the rack comprising a pin 406 moved into and out of engagement with a series of circumferentially spaced notches 408 in a disk 410 arranged to rotate with the steering column 412 of the vehicle so that the steering column is precluded from rotation with the pin 406 in its advanced position in engagement with a slot 408. The described system functions in known manner to lock the steering column in response to movement of the key 402 to the key-in/lock position of the ignition switch and functions in known manner to unlock the column in response to movement of the key and ignition switch to the off position. It will be understood that the column locking arrangement is seen schematically and in somewhat simplified form in Figure 16. Specifically, in actuality, the rack and pinion unit is provided with a lost motion, spring loaded movement so that if pin 406 does not index with a slot 408 in response to movement of the key to the key-in/lock position, the pin is spring loaded against the disk 410 so that when the wheel and disk are thereafter turned slightly, the pin will move into the next slot and lock the steering wheel.

In accordance with the invention, means are provided to preclude movement of the ignition switch to the key-in/lock position when the vehicle is moving in excess of a predetermined maximum speed such, for example, as 3 miles per hour. This is accomplished by providing a solenoid 414 in proximity to the ignition switch with its plunger 416 normally biased by a spring 418 to a position clear of the path of movement of the ignition switch but movable in response to energization of the solenoid downwardly to the dotted line position of Figure 17 wherein it blocks movement of the ignition from the off to the key-in/lock position by blockingly interengaging a suitable lug or other blocking means 420 provided on the ignition switch and rotating with the ignition switch. Specifically, solenoid 414 is energized in response to a trigger signal from logic control unit 386 via lead 422. The signal conveyed via lead 422 is a "not in park" signal; that is, as long as the logic control unit 386 determines via the input from present gear encoder 360 via line 374 that the transmission is not in park, a signal is transmitted on lead 422 to energize the solenoid so that the plunger of the solenoid remains in a blocking position to prevent movement of the ignition switch from the on or off position to the key-in/lock position. Since the threshold signal provided by speed decoder 394 corresponding to permissibility to shift the transmission to park is in the order of three miles per hour (threshold signal MPH3), the system in effect functions to preclude movement of the ignition switch to the key-in/lock position in response to a sensed vehicle speed in excess of the predetermined threshold value for permissible shifting into park, for example, 3 miles per hour. As indicated, the signal on lead 422 is a trigger signal and is fed to a field effect transistor 424 which is connected to the positive terminal of the vehicle battery 426 so that vehicle battery voltage is supplied by a lead 426 to energize solenoid 414 and maintain the plunger 416 in a blocking position in so long as lead 422 continues to provide a "not in park" signal. Logic control unit 386 is programmed to shift the transmission to park automatically in response to movement of the ignition switch from the on position to the off position in so long as the threshold speed signal being supplied at that instant by speed decoder 394 indicates that such a shift is permissible, that is, indicates that the vehicle speed is below 3 miles per hour. Thus, as a practical matter, in the normal operation of the vehicle, the plunger of the solenoid is retracted by the spring 418 during starting of the vehicle since lead 422 at that time is not providing a "not in park" signal and does not provide such a signal until the vehicle is started and the transmission is shifted to any gear other than park. At that time a "not in park" signal is provided to field effect transistor 424 via lead 422 to energize the solenoid and move the solenoid plunger 416 into a blocking position with respect to the lug 420 of the ignition switch so that, as the vehicle is thereafter driven in the transmission drive gears, the plunger 416 precludes inadvertent movement of the ignition switch to the key-in/lock position, such for example as by an uncontrolled child or as by rambunctious occupant movement in the vicinity of the ignition switch. As the vehicle is brought to a stop in the normal course of operation and the ignition switch is moved from on to off, the logic control unit 86 functions automatically to shift the transmission to park so that the "not in park" signal in lead 422 is no longer present and the solenoid is deenergized to allow the spring 418 to move the plunger 416 to a retracted position and allow movement of the ignition switch from the off to the key-in/lock position so as to lock the steering column.

In accordance with another aspect of the modified invention control system, the existing electric shift mechanism is utilized to provide an effective anti-theft deterrent for the vehicle. Specifically, the anti-theft system is provided by a sequential logic circuit 428, a timer 430, an AND gate 432, and an alarm 434.

Sequential logic circuit 428 is connected to push-button module 396 and specifically receives signals from module 396 coded to correspond to the particular push button depressed by the operator. Sequential logic 428 is connected to timer 430 by a conduit 436 and timer 430 is in turn connected to a door/door handle switch 438 by a lead 440. Switch 438 may be actuated by opening of the vehicle driver door 318 or by movement of the door handle 320. Logic circuit 428 is also connected via lead 442 to a lead 444 extending to logic control unit 386 and to a lead 446 extending to AND gate 432. A further output lead 448 from sequential logic circuit 428 extends to alarm 434 which may be in the form of a horn suitably positioned in the engine compartment of the vehicle. AND gate 432 is also connected by a lead 450 to logic control unit 386, by a lead 451 to the start position of the ignition switch, and by a lead 452 to the starter motor 453 of the vehicle.

Sequential logic circuit 428 is operable in known manner to generate a coded anti-theft signal in response to receipt of an appropriate signal from push-button module 388. For example, sequential logic circuit 428 may respond to a three-digit signal from module 396 with the signal consisting of a predetermined combination of push buttons (i.e., P, R, N, O, D, 2 or 1) depressed in a predetermined sequence. For example, sequential logic circuit 428 may respond to the code signal 2PN as provided by the vehicle operator to generate the required anti-theft code signal. The sequential logic circuit 428 functions to deliver a shift enable signal via leads 442 and 444 to the logic control unit 386 and a start enable signal via leads 442 and 446 to AND gate 432, or an alarm signal via lead 448 to horn 434.

Specifically, when door 318 or door handle 320 is suitably actuated by the vehicle operator as the operator enters the vehicle passenger compartment, timer 430 is started and will run, for example, for a period of between 15 and 30 seconds. During this time frame, the vehicle operator must punch in the specific predetermined anti-theft code sequence via push buttons 396 of the push-button module 388 so as to allow the sequential logic circuit 428 to issue a shift enable signal to the logic control unit 386 via lead 444 and deliver a start enable signal via lead 446 to AND gate 432.

Logic control unit 386 is programmed so as not to permit any shifting of the vehicle, irrespective of commands received from desired gear encoder 390, unless and until a shift enable signal is received via lead 444 from sequential logic circuit 428. Further, AND gate 432 is in the starter motor circuit and will not permit starting of the vehicle, despite movement of the ignition switch to the start position, unless the AND gate 432 is also receiving a start enable signal from sequential logic circuit 428 via lead 446 and is further receiving a park/neutral signal from lead 450 indicating that the transmission is in a neutral or park position. Once the operator has punched in the proper predetermined anti-theft code sequence, the sequential logic circuit 428 functions to allow starting of the vehicle and subsequent shifting of the vehicle.

If the proper anti-theft code is not punched in within the time frame as determined by timer 430, sequential logic circuit 428 generates an output alarm signal on line 448 to horn 434 to actuate the horn as a warning that an attempt is being made to steal the vehicle. The operator may still punch in the proper predetermined anti-theft code sequence after the horn is sounded and sequential logic circuit 428, upon receipt of the proper predetermined anti-theft code sequence from push-button module 388, will terminate the alarm signal to the horn 434 and deliver the shift enable and start enable signals to the logic control unit 386 and the AND gate 432 respectively.

According to a further aspect of the invention control system, means are provided to continuously display the instantaneous position of the transmission at all appropriate times and in a manner to clearly apprise the operator of the position of the transmission. The transmission display feature of the invention is provided by a present gear indicator 454, a present gear indicator driver module 456, an instrument panel display 458 preferably of the vacuum fluorescent type, and a timer 460. Present gear indicator driver module 456 is connected to logic control unit 386 via lead 462 and is in turn connected to present gear indicator module 454 via lead 464. Timer 460 is connected by a lead 466 to logic control unit 386 and by a lead 468 to door/door handle switch 438. A lead 470 connects instrument panel VF display 458 to present gear indicator module 454 and a lead 472 connects circuit 468 to ignition switch 400. Lead 472 provides a "key-in" signal and, specifically, provides a positive signal at any time that the key is inserted in the ignition switch irrespective of the position of the ignition switch.

Present gear indicator module 454 is physically positioned adjacent push-button module and includes a plurality of lights 474 corresponding in number to the push buttons 396 of the push-button module with a light 474 positioned immediately adjacent each of the push buttons 396 of the push-button module.

During normal vehicle operation, present gear indicator driver module 456 receives an appropriate coded signal from logic control unit 386 via lead 462 representative of the present transmission position and transmits an appropriate driver signal via lead 464 to present gear indicator module 454 to light the appropriate light 474 corresponding to the instantaneous position of the transmission. At the same time, present gear indicator driver module 456 transmits a drive signal via lead 464 and lead 470 to instrument panel display 458 which functions to display, in letter legend, the instantaneous position of the transmission in a window 476 provided in the instrument panel of the vehicle directly in the line of sight of the vehicle operator. That is, if the vehicle transmission is presently in park, the light 474 adjacent the park push button will be lit and the word "PARK" will be displayed in the window 476.

When the operator enters the vehicle and actuates the switch 438, timer 460 is started and a signal is transmitted to logic control unit 386 via lead 466 and thence via lead 462 to present gear indicator driver module 456 so as to generate an appropriate drive signal via lead 464 to present gear indicator module 454 to light the appropriate light 474 and generate a drive signal in lead 470 to display the appropriate letter legend in window 476, thereby to indicate the instantaneous position of the transmission. Since, as previously indicated, logic control unit 386 functions in response to movement of the ignition key to the off position to automatically shift the transmission to the park position, the transmission will be in the park position as the operator returns to the vehicle, and accordingly, the light 474 opposite the park push button will be lit and the instrument panel display 458 will display the word "PARK". This display of the appropriate lamp 474 and of the instrument panel display 458 will continue for the time determined by the timer 460 and the display will be terminated as the timer 460 runs out unless the key has been in the meantime inserted in the ignition switch so as to generate a key-in signal on line 472. The key-in signal generated in line 472 allows the appropriate lamp 474 as well as the instrument panel display 458 to remain powered up by the logic control unit despite the passage of the predetermined time as measured by the timer 460. When the vehicle in the normal course of operation is stopped and the ignition switch is moved to the off position and then to the key-in/lock position, as the key is thereafter removed from the ignition switch the key-in signal via line 472 is terminated and the timer 460 functions to continue to power up the appropriate lamp 474 and the instrument panel display 458 for the period of time determined by the setting of the timer 460. Since, as previously indicated, the logic control unit functions to automatically cycle the transmission to park upon movement of the ignition switch to the off position, the invention control system will continue to display the "PARK" legend in the instrument panel display 458 and will continue to light the lamp 474 opposite the park push button for the period of time determined by timer 460 following removal of the key from the ignition switch. The invention transmission display system will be seen to provide a clear and positive indication to the vehicle operator at all times of the instantaneous position of the transmission, both by virtue of the particular lamp 474 that is lit in the present gear indicator module 454 and by virtue of the specific legend displayed in the instrument panel display 458, further functions to provide an indication and an assurance to the operator as he is leaving the vehicle that the transmission has in fact cycled to park and is therefore safe to leave, and further provides an indication as the operator reenters the vehicle that the transmission is in fact in the park position.

Whereas preferred embodiments of the invention have been illustrated and described in detail, it will be apparent that various changes may be made in the disclosed embodiment without departing from the scope of the invention.

## Claims

1. An electrical control apparatus for control of a transmission (20) in a motor vehicle having a plurality of transmission states (P,R,N,O,D,1,2) selected by movement of a state selection member (22), said electrical control apparatus comprising:
electrical actuator means (42) adapted for connection with the transmission state selection member (22) to shift the transmission apparatus between transmission states,
a gear selector (30) including a plurality of driver-operated momentary contact push buttons (100), each corresponding to a predetermined transmission state of said plurality of transmission states; and
a logic control unit (30b) connected to the electrical actuator means (42) and said plurality of momentary contact push buttons (100), the logic control unit generating a desired transmission state signal corresponding to the contact push button depressed by the driver and also controlling the electrical actuator means (42) to shift the transmission from its present state to the state corresponding to said desired transmission state signal, the apparatus being characterised in that the transmission (20) has a state selector member (22) which is connected with an actuator means (42,36) and a transmission state sensing means (73,210) which provides a signal (88) to the logic control unit (30b) indicative of the current state of the transmission, the logic control unit (30b) comparing the signal from the transmission state sensing means with the desired transmission state signal and actioning the electrical actuator means (42) to shift to the desired transmission state if these signals differ, and the actuator means (42,36) also operates a kick-down lever (24) of the transmission under the control of the logic control unit (30b) in response to signals (126) received by the logic control unit from a sensing means (138) associated with an accelerator pedal (14) of the vehicle indicating a kick-down operation of the accelerator pedal.

2. A control apparatus according to claim 1 characterised in that the electrical actuator means comprises an electric motor (42) which operates the transmission state selection member (22) and a solenoid (36) which operates the kick-down lever (24).

3. A control apparatus according to Claim 2 characterised in that the linkage (58,60) is connectable with the transmission state selection member (22) via a first quick-attach formation (60a) and the solenoid is connectable with the kick-down lever (24) via a second quick-attach formation (72).

4. A control apparatus according to any one of claims 1 to 3 characterised in that the transmission state sensing means (73,210) comprises a wheel (74) which is rotated by the actuator means during shifting of the transmission states and which has conductive indicia tracks (80a,80b,80c, and 80d) which move past a pick-up device (76) to provide in co-operation with the pick-up signals indicative of the current state of the transmission.

5. A control apparatus according to claim 4 when dependant on claim 2 or 3 characterised in that the electric motor (42), solenoid (36) and sensing wheel (74) are all mounted in the transmission casing via a common bracket (32).

6. A control apparatus according to claim 4 or 5 characterised in that the sensing wheel (74) rotates with part (54) of a speed reduction unit (44) which forms part of the linkage (44, 58, 60) between the electric motor (42) and the transmission state selection member (22).

7. An electrical control apparatus according to any one of claims 1 to 6 for a transmission which includes the transmission states of park, reverse, neutral and at least one forward transmission state, the apparatus being characterised in that the logic control unit (30b) generates said desired transmission state signal in accordance with the following hierarchy of a rank order from the highest priority to the lowest priority, if more than one momentary contact push button (100) is depressed: park (P), reverse (R), neutral (N), and the at least one forward transmission state in order from highest final gear ratio to lowest final gear ratio.

8. An electrical control apparatus according to claim 7 for a transmission which includes the transmission state of park characterised in that the logic control unit (30b) generates said desired transmission state signal corresponding to the transmission state of park (P) if said momentary contact push button (100) corresponding to the transmission state of park and any other momentary contact push button is depressed.

9. An electrical control apparatus according to claim 7 or 8 for a transmission which includes the transmission states of park and reverse characterised in that the logic control unit (30b) generates said desired transmission state signal corresponding to the transmission state of park (P) if said momentary contact push button switch corresponding to the transmission state of park (P) and any other momentary contact push buttons (100) are depressed,corresponding to the transmission state of reverse (R) if said momentary contact push button (100) corresponding to the transmission state of reverse (R) and any other momentary contact push button except said momentary contact push button switch corresponding to the transmission state of park (P) are depressed.

10. An electrical control apparatus according to any one of Claims 1 to 9 characterised in that the logic control unit (30b) also generates a fault signal if said desired transmission state signal differs from said present transmission state signal for longer that a predetermined period of time, for inhibiting control of the electrical actuator means (42) upon generation of said fault signal, and a fault indicator (101) connected to said logic control means produces an operator perceivable fault indication upon generation of said fault signal.

11. The electrical control apparatus according to Claim 10 characterised in that said fault indicator consists of a fault lamp (101) which is illuminated upon generation of said fault signal.

12. An electrical control apparatus according to any one of Claims 1 to 11 characterised in that the logic control unit (30b) receives signals from a vehicle speed sensing means (137) and generates an error signal (103) if said vehicle speed signals indicate a vehicle speed greater than a predetermined vehicle speed corresponding to said desired transmission state signal, the electronic control unit also inhibits control of the electrical actuator means (42) and provides a signal to an error indicator (103) upon generation of said error signal.

13. The electrical control apparatus according to Claim 12 wherein the transmission includes at least the transmission states of park, reverse, low 1 and low 2, the apparatus being characterised in that said logic control unit (30b) generates said error signal (103) if said speed signal indicates a vehicle speed greater than a first predetermined vehicle speed and said desired transmission state signal corresponds to the transmission state of park (P),if said speed signal indicates a vehicle speed greater than a second predetermined vehicle speed greater than said first predetermined vehicle speed and said desired transmission state signal corresponds to the transmission state of reverse (R),if said speed signal indicates a vehicle speed greater than a third predetermined vehicle speed greater than said second predetermined vehicle speed and said desired transmission state signal corresponds to the transmission state of low 1, and
if said speed signal indicates a vehicle speed greater than a fourth predetermined vehicle speed greater than said third predetermined vehicle speed and said desired transmission state signal corresponds to the transmission state of low 2.

14. A control apparatus according to any one of Claims 1 to 13 characterised in that the logic control unit (38) provides as an output a signal (458,474) to the driver indicative of the current state of the transmission (20).

15. A control apparatus according to claim 14 characterised in that the signal indicative of the current state of the transmission for the logic control unit (30b) is displayed to the driver for a predetermined time after removal of an ignition key (402) from an ignition lock (400) of the vehicle and also for a predetermined time after the entry of the driver into the vehicle.

16. A control apparatus according to Claim 15 characterised in that the logic control unit (30b) issues a signal to the electrical actuator means (42) to select the park transmission state (P) when the ignition key (402) is moved from an "on" to an "off" position.

17. A control apparatus according to any one of Claims 1 to 16 characterised in that the electrical actuator means (340) forms part of an anti-theft logic circuit (428) which includes the gear selector (396) and which requires the push buttons of the gear selector to be operated in a predetermined sequence before operation of the electrical actuator means is enabled.

18. A control apparatus according to any one of Claims 1 to 17 characterised in that the electronic control unit (30b) also senses various vehicle and driver conditions and issues a signal to a lock (404, 406, 408, 410) associated with a steering column (412) of the vehicle to lock the column against rotation if a predetermined set of sensed vehicle and driver conditions occurs.

## Patentansprüche

1. Elektrische Steuervorrichtung zur Steuerung eines Getriebes (20) bei einem Kraftfahrzeug mit einer Vielzahl von Übersetzungszuständen (P, R, N, O, D, 1, 2), die durch Bewegung eines Zustandswählglieds (22) ausgewählt werden, wobei die elektrische Steuervorrichtung aufweist:
eine elektrische Betätigungseinrichtung (42), die zur Verbindung mit dem Übersetzungszustandswählglied (22) geeignet ist, um die Getriebeeinrichtung zwischen den Übersetzungszuständen zu verändern,
eine Gangwähleinrichtung (30), die eine Vielzahl von von dem Fahrer betätigbaren Momentkontakt-Drucktasten (100) aufweist, wobei jede einen bestimmten Übersetzungszustand der Vielzahl von Übersetzungszuständen entspricht; und
eine Logiksteuereinheit (30b), die an die elektrische Betätigungseinrichtung (42) und die Vielzahl von Momentkontakt-Drucktasten (100) angeschlossen ist, wobei die Logiksteuereinheit ein Signal des gewünschten Übersetzungszustands erzeugt, daß der Kontaktdrucktaste entspricht, die von dem Fahrer gedrückt wurde, und auch die elektrische Betätigungseinrichtung (42) ansteuert, um das Getriebe aus seinem gegenwärtigen Zustand in den Zustand zu versetzen, der dem Signal des gewünschten Übersetzungszustands entspricht, wobei die Vorrichtung dadurch gekennzeichnet ist, daß das Getriebe (20) ein Zustandswählglied (22) aufweist, das mit einer Betätigungseinrichtung (42, 36) und einer Übersetzungszustandsabtasteinrichtung (73, 210) verbunden ist, die der Logiksteuereinheit (30b) ein Signal (88) zur Verfügung stellt, das den gegenwärtigen Zustand des Getriebes anzeigt, wobei die Logiksteuereinheit (30b) das Signal von der Übersetzungszustandsabtasteinrichtung mit dem Signal des gewünschten Übersetzungszustands vergleicht und die elektrische Betätigungseinrichtung (42) in Betrieb setzt, um in den gewünschten Übersetzungszustand zu schalten, wenn sich diese Signale voneinander unterscheiden, und daß die Betätigungseinrichtung (42, 36) auch einen Kick-Down-Hebel (24) des Getriebes unter der Kontrolle der Logiksteuereinheit (30b) als Reaktion auf Signale (126) betreibt, die von der Logiksteuereinheit von einer Abtasteinrichtung (138) empfangen werden, die mit einem Gaspedal (14) des Fahrzeugs verbunden ist, und eine Kick-Down-Betätigung des Gaspedals anzeigen.

2. Steuervorrichtung nach Anspruch 1, dadurch gekennzeichnet, daß die elektrische Betätigungseinrichtung einen Elektromotor (42), der das Übersetzungszustandswählglied (22) betätigt, und einen Magnet (36) aufweist, der den Kick-Down-Hebel (24) betätigt.

3. Steuervorrichtung nach Anspruch 2, dadurch gekennzeichnet, daß die Verbindung (58, 60) mit dem Übersetzungszustandswählglied (22) über eine erste Schnellbefestigungsanordnung (60a) verbindbar ist, und die Magnetspule mit dem Kick-Down-Hebel (24) über eine zweite Schnellbefestigungsanordnung (72) verbindbar ist.

4. Steuervorrichtung nach einem der Ansprüche 1 bis 3, dadurch gekennzeichnet, daß die Übersetzungszustandsabtasteinrichtung (73, 210) ein Rad (74) aufweist, das von der Betätigungseinrichtung während der Änderung der Übersetzungszustände gedreht wird, und das leitfähige Kennzeichenbahnen (80a, 80b, 80c und 80d) aufweist, die sich an einer Aufnahmeeinrichtung (76) vorbeibewegen, um in Zusammenwirkung mit der Aufnahmeeinrichtung Signale zu schaffen, die den gegenwärtigen Zustand des Getriebes anzeigen.

5. Steuervorrichtung nach Anspruch 4 in Abhängigkeit von Anspruch 2 oder 3, dadurch gekennzeichnet, daß der Elektromotor (42), der Magnet (36) und das Abtastrad (74) alle in dem Getriebegehäuse über eine gemeinsame Halterung (32) montiert sind.

6. Steuerungsvorrichtung nach Anspruch 4 oder 5, dadurch gekennzeichnet, daß sich das Abtastrad (74) mit einem Teil (54) eines Reduktionsgetriebes (44) dreht, das einen Teil der Verbindung (44, 58, 60) zwischen dem Elektromotor (42) und dem Übersetzungszustandswählglied (22) bildet.

7. Elektrische Steuervorrichtung nach einem der Ansprüche 1 bis 6 für ein Getriebe, das die Übersetzungszustände Parken, Rückwärts, Leerlauf und zumindest einen VorwärtsÜbersetzungszustand umfaßt, wobei die Vorrichtung dadurch gekennzeichnet ist, daß die Logiksteuereinheit (30b) das Signal des gewünschten Übertragungszustands in Übereinstimmung mit der folgenden Hirarchie einer Rangordnung von der höchsten Priorität zu der niedrigsten Priorität erzeugt, wenn mehr als eine Momentkontakt-Drucktaste (100) gedrückt wird: Parken (P), Rückwärts (R), Leerlauf (N) und der zumindest eine Vorwärts-Übersetzungszustand in der Reihenfolge von dem höchsten Übersetzungsverhältnis zu dem niedrigsten Übersetzungsverhältnis.

8. Elektrische Steuervorrichtung nach Anspruch 7 für ein Getriebe, das den Übersetzungszustand Parken aufweist, dadurch gekennzeichnet, daß die Logiksteuereinheit (30b) das Signal des gewünschten Übersetzungszustands entsprechend dem Übersetzungszustand Parken (P) erzeugt, wenn die Momentkontakt-Drucktaste (100), die dem Übersetzungszustand Parken entspricht, und irgendeine andere Momentkontakt-Drucktaste gedrückt werden.

9. Elektrische Steuervorrichtung nach Anspruch 7 oder 8 für ein Getriebe, das die Übersetzungszustände Parken und Rückwärts aufweist, dadurch gekennzeichnet, daß die Logiksteuereinheit (30b) das Signal des gewünschten Übersetzungszustands erzeugt, das dem Übersetzungszustand Parken (P) entspricht, wenn der Momentkontakt-Drucktastenschalter, der dem Übersetzungszustand Parken (P) entspricht, und irgendwelche anderen Momentkontakt-Drucktasten (100) gedrückt werden, und das Signal erzeugt, das dem Übersetzungszustand Rückwärts (R) entspricht, wenn die Momentkontakt-Drucktaste (100), die dem Übersetzungszustand Rückwärts (R) entspricht, und irgendeine weitere Momentkontakt-Drucktaste außer dem Momentkontakt-Drucktastenschalter gedrückt werden, der dem Übersetzungszustand Parken (P) entspricht.

10. Elektrische Steuervorrichtung nach einem der Ansprüche 1 bis 9, dadurch gekennzeichnet, daß die Logiksteuereinheit (30b) auch ein Störungssignal erzeugt, wenn sich das Signal des gewünschten Übersetzungszustands von dem Signal des gegenwärtigen Übersetzungszustands für eine längere als eine bestimmte Zeitdauer unterscheidet, um die Ansteuerung der elektrischen Betätigungseinrichtung (42) nach Erzeugung des Störungssignals zu verhindern, und daß eine Störungsanzeigeeinrichtung (101), die an die Logiksteuereinrichtung angeschlossen ist, eine vom Bediener erkennbare Störungsanzeige nach Erzeugung des Störungssignals erzeugt.

11. Elektrische Steuervorrichtung nach Anspruch 10, dadurch gekennzeichnet, daß die Störungsanzeigeeinrichtung eine Störungslampe (101) umfaßt, die nach Erzeugung des Störungssignals beleuchtet wird.

12. Elektrische Steuervorrichtung nach einem der Ansprüche 1 bis 11, dadurch gekennzeichnet, daß die Logiksteuereinheit (30b) Signale von einer Fahrzeuggeschwindigkeits-Meßfühlereinrichtung (137) empfängt und ein Fehlersignal (103) erzeugt, wenn die Fahrzeuggeschwindigkeitssignale eine Fahrzeuggeschwindigkeit anzeigen, die größer als eine bestimmte Fahrzeuggeschwindigkeit ist, die dem Signal des gewünschten Übersetzungszustands entspricht, wobei die elektrische Steuereinheit auch die Ansteuerung der elektrischen Betätigungseinrichtung (42) verhindert und einer Fehleranzeigeeinrichtung (103) nach Erzeugung des Fehlersignals ein Signal zur Verfügung stellt.

13. Elektrische Steuervorrichtung nach Anspruch 12, wobei das Getriebe zumindest die Übersetzungszustände Parken, Rückwärts, niedrige Fahrstufe 1 und niedrige Fahrstufe 2 aufweist, wobei die Vorrichtung dadurch gekennzeichnet ist, daß die Logiksteuereinheit (30b) das Fehlersignal (103) erzeugt, wenn das Geschwindigkeitssignal eine Fahrzeuggeschwindigkeit anzeigt, die größer als eine erste bestimmte Fahrzeuggeschwindigkeit ist, und das Signal des gewünschten Übersetzungszustands dem Übersetzungszustand Parken (P) entspricht, wenn das Geschwindigkeitssignal eine Fahrzeuggeschwindigkeit anzeigt, die größer als eine zweite bestimmte Fahrzeuggeschwindigkeit ist, die größer als die erste bestimmte Fahrzeuggeschwindigkeit ist, und das Signal des gewünschten Übersetzungszustands dem Übersetzungszustand Rückwärts (R) entspricht, wenn das Geschwindigkeitssignal eine Fahrzeuggeschwindigkeit anzeigt, die größer als eine dritte bestimmte Fahrzeuggeschwindigkeit ist, die größer als die zweite bestimmte Fahrzeuggeschwindigkeit ist, und das Signal des gewünschten Übersetzungszustands dem Übersetzungszustand niedrige Fahrstufe 1 entspricht, und
wenn das Geschwindigkeitssignal eine Fahrzeuggeschwindigkeit anzeigt, die größer als eine vierte bestimmte Fahrzeuggeschwindigkeit ist, die größer als die dritte bestimmte Fahrzeuggeschwindigkeit ist, und das Signal des gewünschten Übersetzungszustands dem Übersetzungszustand niedrige Fahrstufe 2 entspricht.

14. Steuervorrichtung nach einem der Ansprüche 1 bis 13, dadurch gekennzeichnet, daß die logische Steuereinheit (38) als Ausgang ein Signal (458, 474) zur Verfügung stellt, das dem Fahrer den gegenwärtigen Zustand des Getriebes (20) anzeigt.

15. Steuervorrichtung nach Anspruch 14, dadurch gekennzeichnet, daß das Signal, das den gegenwärtigen Zustand des Getriebes für die Logiksteuereinheit (30b) anzeigt, dem Fahrer für eine bestimmte Zeit nach der Entfernung des Zündschlüssels (402) aus dem Zündschloß (400) des Fahrzeugs anzeigt, und auch für eine bestimmte Zeit anzeigt, nachdem der Fahrer in das Fahrzeug eingestiegen ist.

16. Steuervorrichtung nach Anspruch 15, dadurch gekennzeichnet, daß die Logiksteuereinheit (30b) ein Signal an die elektrische Betätigungseinrichtung (42) ausgibt, um den Übersetzungszustand Parken (P) auszuwählen, wenn der Zündschlüssel (402) von einer "An"- in eine "Aus"-Stellung bewegt wird.

17. Steuervorrichtung nach einem der Ansprüche 1 bis 16, dadurch gekennzeichnet, daß die elektrische Betätigungseinrichtung (340) einen Teil einer Diebstahlsicherungsschaltung (428) bildet, die die Gangwähleinrichtung (396) umfaßt, und die erfordert, daß die Drucktasten der Gangwähleinrichtung in einer bestimmten Reihenfolge betätigt werden müssen, bevor ein Betrieb der elektrischen Betätigungseinrichtung möglich ist.

18. Steuervorrichtung nach einem der Ansprüche 1 bis 17, dadurch gekennzeichnet, daß die elektronische Steuereinheit (30b) auf verschiedene Zustände des Fahrzeugs und des Fahrers mißt und ein Signal an ein Schloß (404, 406, 408, 410) ausgibt, das mit einer Steuersäule (412) des Fahrzeugs verbunden ist, um die Säule gegen Drehung zu sperren, wenn ein bestimmter Satz an Zuständen des Fahrzeugs und des Fahrers auftritt.

## Revendications

1. Appareil de commande électrique pour commander une transmission (20) d'un véhicule à moteur ayant une pluralité d'états de transmission (P, R, N, O, D, 1, 2) sélectionnés par le déplacement d'un élément de sélection d'état (22), ledit appareil de commande électrique comprenant :
des moyens d'actionnement électriques (42) adaptés pour être connectés à l'élément de sélection d'état de transmission (22) pour faire varier l'appareil de transmission entre les états de transmission,
un sélecteur de rapport (30) comprenant une pluralité de boutons-poussoir à contact momentané (100), actionnés par le conducteur, correspondant chacun à un état de transmission prédéterminé de ladite pluralité d'états de transmission ; et
une unité de commande logique (30b) connectée aux moyens d'actionnement électriques (42) et à ladite pluralité de boutons-poussoir à contact momentané (100), l'unité de commande logique générant un signal d'état de transmission souhaité, correspondant au bouton-poussoir à contact enfoncé par le conducteur, et commandant également les moyens d'actionnement électriques (42) pour faire passer la transmission de son état actuel vers l'état correspondant audit signal d'état de transmission souhaité, l'appareil étant caractérisé en ce que la transmission (20) possède un élément sélecteur d'état (22) qui est raccordé à des moyens d'actionnement (42, 36) et à des moyens de détection de l'état de la transmission (73, 210) qui envoient à l'unité de commande logique (30b) un signal (88) indiquant l'état actuel de la transmission, l'unité de commande logique (30b) comparant le signal provenant des moyens de détection de l'état de la transmission au signal d'état de transmission souhaité et actionnant les moyens d'actionnement électriques (42) pour passer à l'état de transmission souhaité si ces signaux diffèrent, et les moyens d'actionnement (42, 36) manoeuvrent également un levier de commande de charge (24) de la transmission, sous la commande de l'unité de commande logique (30b), en réponse aux signaux (126) reçus par l'unité de commande logique depuis des moyens de détection (138) associés à une pédale d'accélérateur (14) du véhicule, indiquant une opération de commande de charge de la pédale d'accélérateur.

2. Appareil de commande selon la revendication 1, caractérisé en ce que les moyens d'actionnement électriques comprennent un moteur électrique (42) qui manoeuvre l'élément de sélection d'état de transmission (22) et un solénoïde (36) qui manoeuvre le levier de commande de charge (24).

3. Appareil de commande selon la revendication 2, caractérisé en ce que la tringlerie (58, 60) peut être raccordée à l'élément de sélection d'état de transmission (22) par l'intermédiaire d'une première formation d'attache rapide (60a) et le solénoïde peut être raccordé au levier de commande de charge (24) par l'intermédiaire d'une deuxième formation d'attache rapide (72).

4. Appareil de commande selon l'une quelconque des revendication 1 à 3, caractérisé en ce que les moyens de détection de l'état de la transmission (73, 210) comprennent une roue (74) qui est entraînée en rotation par les moyens d'actionnement pendant le changement des états de transmission et qui a des empreintes formant indices conducteurs (80a, 80b, 80c et 80d) qui se déplacent devant un dispositif capteur (76) pour émettre, en coopération avec le capteur, des signaux indiquant l'état actuel de la transmission.

5. Appareil de commande selon la revendication 4, lorsqu'elle dépend de la revendication 2 ou 3, caractérisé en ce que le moteur électrique (42), le solénoïde (36) et la roue de détection (74) sont tous montés dans le carter de transmission, par l'intermédiaire d'une console commune (32).

6. Appareil de commande selon la revendication 4 ou 5, caractérisé en ce que la roue de détection (74) tourne avec une partie (54) d'une unité de réduction de vitesse (44) qui forme une partie de la tringlerie (44, 58, 60) entre le moteur électrique (42) et l'élément de sélection de l'état de la transmission (22).

7. Appareil de commande électrique selon l'une quelconque des revendications 1 à 6, pour une transmission qui comprend les états de transmission de stationnement, marche arrière, point mort et au moins un état de transmission de marche avant, l'appareil étant caractérisé en ce que l'unité de commande logique (30b) génère ledit signal d'état de transmission souhaité selon la hiérarchie suivante, dans l'ordre, depuis la priorité la plus forte jusqu'à la priorité la plus faible, si plus d'un bouton-pression à contact momentané (100) est enfoncé : stationnement (P), marche arrière (R), point mort (N), et l'au moins un état de transmission en marche avant, dans l'ordre, depuis le plus haut rapport d'engrènement final jusqu'au plus bas rapport d'engrènement final.

8. Appareil de commande électrique selon la revendication 7, pour une transmission qui comprend l'état de transmission de stationnement, caractérisé en ce que l'unité de commande logique (30b) génère ledit signal d'état de transmission souhaité correspondant à l'état de transmission de stationnement (P) si ledit bouton-pression à contact momentané (100) correspondant à l'état de transmission de stationnement et un quelconque autre bouton-pression à contact momentané sont enfoncés.

9. Appareil de commande électrique selon la revendication 7 ou 8, pour une transmission qui comprend les états de transmission de stationnement et de marche arrière, caractérisé en ce que l'unité de commande logique (30b) génère ledit signal d'état de transmission souhaité, correspondant à l'état de transmission de stationnement (P) si ledit bouton-poussoir à contact momentané correspondant à l'état de transmission de stationnement (P) et de quelconques autres boutons-poussoir à contact momentané (100) sont enfoncés, correspondant à l'état de transmission de marche arrière (R) si ledit bouton-poussoir à contact momentané (100) correspondant à l'état de transmission de marche arrière (R) et un quelconque autre bouton-pression à contact momentané, sauf ledit bouton-pression à contact momentané correspondant à l'état de transmission de stationnement (P), sont enfoncés.

10. Appareil de commande électrique selon l'une quelconque des revendications 1 à 9, caractérisé en ce que l'unité de commande logique (30b) génère également un signal de défaut si ledit signal d'état de transmission souhaité diffère dudit signal d'état de transmission présent pendant un laps de temps supérieur à un laps de temps prédéterminé, pour inhiber la commande des moyens d'actionnement électriques (42) lors de la génération dudit signal de défaut, et un indicateur de défaut (101) connecté auxdits moyens de commande logique produit une indication de défaut perceptible par l'opérateur lors de la génération dudit signal de défaut.

11. Appareil de commande électrique selon la revendication 10, caractérisé en ce que ledit indicateur de défaut est constitué d'un voyant de défaut (101), qui est allumé lors de la génération dudit signal de défaut.

12. Appareil de commande électrique selon l'une quelconque des revendications 1 à 11, caractérisé en ce que l'unité de commande logique (30b) reçoit des signaux provenant de moyens de détection de vitesse du véhicule (137) et génère un signal d'erreur (103) si lesdits signaux de vitesse du véhicule indiquent une vitesse du véhicule supérieure à une vitesse de véhicule prédéterminée correspondant audit signal d'état de transmission souhaité, l'unité de commande électronique inhibe également la commande des moyens d'actionnement électriques (42) et envoie un signal à un indicateur d'erreur (103) lors de la génération dudit signal d'erreur.

13. Appareil de commande électrique selon la revendication 12, dans lequel la transmission comprend au moins les états de transmission de stationnement, de marche arrière, de vitesse inférieure 1 et vitesse inférieure 2, l'appareil étant caractérisé en ce que ladite unité de commande logique (30b) génère ledit signal d'erreur (103) si ledit signal de vitesse indique une vitesse de véhicule supérieure à une première vitesse de véhicule prédéterminée et que ledit signal d'état de transmission souhaité correspond à l'état de transmission de stationnement (P), si ledit signal de vitesse indique une vitesse de véhicule supérieure à une deuxième vitesse de véhicule prédéterminée, supérieure à ladite première vitesse de véhicule prédéterminée, et que ledit signal d'état de transmission correspond à l'état de transmission de marche arrière (R), si ledit signal de vitesse indique une vitesse de véhicule supérieure à une troisième vitesse de véhicule prédéterminée supérieure à ladite deuxième vitesse de véhicule prédéterminée et que ledit signal d'état de transmission souhaité correspond à l'état de transmission de vitesse inférieure 1, et si ledit signal de vitesse indique une vitesse de véhicule supérieure à une quatrième vitesse de véhicule prédéterminée supérieure à ladite troisième vitesse de véhicule prédéterminée et que ledit signal d'état de transmission souhaité correspond à l'état de transmission de vitesse inférieure 2.

14. Appareil de commande selon l'une quelconque des revendications 1 à 13, caractérisé en ce que l'unité de commande logique (38) envoie au conducteur, sous la forme d'un signal de sortie, un signal (478, 474) indiquant l'état actuel de la transmission (20).

15. Appareil de commande selon la revendication 14, caractérisé en ce que le signal indiquant l'état actuel de la transmission pour l'unité de commande logique (30b) est affiché au conducteur pendant un laps de temps prédéterminé après l'enlèvement de la clé de contact (402) de la serrure de contact (400) du véhicule, et également pendant un laps de temps prédéterminé après l'entrée du conducteur dans le véhicule.

16. Appareil de commande selon la revendication 15, caractérisé en ce que l'unité de commande logique (30b) envoie un signal aux moyens d'actionnement électriques (42) pour choisir l'état de transmission de stationnement (P) lorsque la clé de contact (402) est déplacée de la position "on" vers la position "off".

17. Appareil de commande selon l'une quelconque des revendications 1 à 16, caractérisé en ce que les moyens de commande électrique (340) forment une partie d'un circuit logique anti-vol (428) qui comprend le sélecteur de rapport (396) et qui nécessite que les boutons-pression du sélecteur de rapport soient actionnés suivant une séquence prédéterminée pour que le fonctionnement des moyens d'actionnement électriques soit autorisé.

18. Appareil de commande selon l'une quelconque des revendications 1 à 17, caractérisé en ce que l'unité de commande électronique (30b) détecte également différents états du véhicule et du conducteur et envoie un signal à un verrou (404, 406, 408, 410) associé à la colonne de direction (412) de véhicule, pour empêcher la colonne de tourner si un ensemble prédéterminé d'états du véhicule et du conducteur sont détectés.
